# EUROPÄISCHE PATENTSCHRIFT

(11) **EP 3 427 372 B1**
(45) Veröffentlichungstag und Bekanntmachung des Hinweises auf die Patenterteilung: **22.06.2022**
(21) Anmeldenummer: 17711589.6
(22) Anmeldetag: 08.03.2017
(51) Int. Cl.: H02K 15/06, H02K 15/085, H02K 15/04, H02K 3/14, H02K 3/28

(54) **HERSTELLUNGSVERFAHREN FÜR EINEN STATOR**
MANUFACTURING METHOD FOR A STATOR
PROCÉDÉ DE FABRICATION D'UN STATOR

(30) Priorität: 08.03.2016 DE 102016104235; 18.04.2016 DE 102016107172
(43) Veröffentlichungstag der Anmeldung: 16.01.2019
(73) Patentinhaber: Grob-Werke GmbH & Co. KG, 87719 Mindelheim (DE)
(72) Erfinder: SEIDEL, Korbinian, 87719 Mindelheim (DE); RAUSCHER, Ralf, 87748 Fellheim (DE); DREIER, Günter, 86489 Deisenhausen (DE); FENDT, Simon, 87757 Kirchheim (DE); WAGNER, Tobias, 86935 Rott (DE); HAGGENMUELLER, Tobias, 87647 Unterthingau (DE); WEGSCHEIDER, Tobias, 87719 Mindelheim (DE)
(74) Vertreter: KASTEL Patentanwälte PartG mbB
(86) Internationale Anmeldenummer: PCT/EP2017/055497
(87) Internationale Veröffentlichungsnummer: WO 2017/153502

(56) Entgegenhaltungen:
- EP-A2- 1 128 530
- DE-A1- 19 549 180
- US-A- 3 118 015
- US-A- 4 381 467
- US-A1- 2011 227 443
- US-A1- 2012 186 081

## Beschreibung

Die Erfindung betrifft ein Verfahren für die Herstellung eines Bauteiles einer elektrischen Maschine, wie zum Beispiel eines Stators mit einer aus Flachdraht gebildeten Drahtmatte oder einer aus Flachdraht gebildeten Drahtmatte für einen Stator.

Die Erfindung bezieht sich ausdrücklich allgemein auf ein Bauteil einer elektrischen Maschine, insbesondere einer aus Flachdraht gebildeten Drahtmatte. Eine solche Drahtmatte oder Drahtwicklung wird in dem Stator einer elektrischen Maschine eingebaut, auch ein solcher Stator ist ein Bauteil im Sinne der hier beschriebenen Erfindung und Offenbarung. Des Weiteren betrifft die Erfindung auch eine Vorrichtung für die Herstellung eines solchen Bauteils. Sowohl das eingangs beschriebene Verfahren, wie auch die Vorrichtung dienen dazu, ein Bauteil einer elektrischen Maschine herzustellen, wobei im Stand der Technik gerade das Bauteil der elektrischen Maschine, zum Beispiel der Stator zu verbessern ist.

Das Dokument US 2012/0186081 A1 offenbart eine Anordnung eines flachen Leiters, welcher teilweise verdreht wird.

Das Dokument US 2011/0227443 A1 offenbart einen Stator mit einer Wicklung aus einem flachen Draht, welcher teilweise gedreht ist.

Das Dokument EP 1 128 530 A2 offenbart einen Stator mit einer Wicklung aus teilweise verdrehtem Dreht.

Die Dokumente US 4 381 467 A und US 3 118 015 A zeigen jeweils eine Veränderung von Drähten in einer Nut.

Das Dokument DE 195 49 180 A1 offenbart einen Stator für eine elektrische Maschine mit einer mäanderförmig um die Pole gelegten, mehrere Windungen aufweisenden Erregerwicklung. Jede Windung der Erregerwicklung ist ein Bündelleiter aus mehreren parallel gewickelten Runddrähten, die auf Stirnseiten der Pole radial zu Jochachse nebeneinander liegen und im Bereich zwischen den Polen miteinander verdreht oder verdrillt sind. Als Zweck dieses Verdrillens ist angegeben, dass bei Verwendung von Runddraht sich der Wickel verfestigt, so dass er ausreichend steif und stabil ist, um außerhalb des Stators vorgefertigt werden zu können.

Es ist Aufgabe der vorliegenden Erfindung, Vorschläge zu unterbreiten, die zu einem hinsichtlich seiner elektrischer Eigenschaften verbesserten Bauteil einer elektrischen Maschine führen.

Dies wird durch ein Verfahren und eine Vorrichtung gemäß den unabhängigen Ansprüchen erreicht. Vorteilhafte Ausführungen sind in den Unteransprüchen beansprucht.

Die Erfindung schafft gemäß einem ersten Aspekt davon ein Verfahren für die Herstellung eines Bauteiles einer elektrischen Maschine, mit einer aus einer Vielzahl von als Flachdrähte ausgebildeten Drähten gebildeten Drahtmatte, umfassend folgende Schritte:
- Anordnen der Vielzahl von Drähten nebeneinander in einer ersten Reihenfolge; und
- z-förmiges Abwinkeln der Drähte;
- Tauschen der Positionen der Drähte zur Bildung einer neuen, zweiten, zur ersten unterschiedlichen Reihenfolge;
- wobei vor dem Tauschen der Positionen der Drähte ein jeweils zweiter Draht in eine eigene Ebene ausgelenkt wird, und dann über einen jeweilig ersten Draht gekreuzt wird;
- wobei das Tauschen der Reihenfolge vor dem Z-förmigen Abwinkeln der Flachdrähte erfolgt.

Im Folgenden werden Merkmale und Vorteile bevorzugter Ausgestaltungen der Erfindung näher erläutert.

Üblicherweise wird der Draht, insbesondere ein Flachdraht auf einer Rolle vorgehalten, von welchen dieser abgezogen wird. Beim Richten des Drahtes wird der Draht so beansprucht, dass er gerade ist. Als Flachdraht wird hierbei ein Draht mit rechteckigen Querschnitt verstanden bei welchem die Seitenlängenverhältnisse (im Querschnitt) zum Beispiel 1,5 : 1 bzw. 2 : 1 oder 3 : 1 beträgt.

Dieser Draht wird in die längsverlaufende Nut eines Stators oder Rotors eingesetzt. Es ist günstiger Weise vorgesehen, die Nutbreite etwas größer zu wählen als die kürzere Querschnittsseite des Drahtes. Hieraus resultiert, dass der Draht hochkant in der Nut eingesetzt ist. Bei dem Nutsprung, das bedeutet, wenn der Draht die erste Nut verlässt, dann giebeldachartig in einer Abwinkelung umgelenkt wird und dann in die nächste, zweite Nut wieder eintaucht, besteht das Problem, dass ein Biegen über die kurze Kante im Stand der Technik notwendig ist, was von Nachteil ist, da hieraus ein größerer Wickelkopfaufbau resultiert, beim Biegen höhere Belastungen auf die Isolationsschicht, die den Draht umgibt, besteht und pro Stator mehr Kupfer verbraucht wird.

Um diese Nachteile zu vermeiden wird ein Biegeprozess über die hohe Kante, lange Seite bzw. lange Querschnittsseite durchgeführt. Hierfür ist gemäß einer Ausgestaltung des Verfahrens vor dem Biegen zum Erzeugen ein abschnittsweise Verdrillen des Drahtes vorgesehen.

Dieser Vorschlag führt daher zu einer erheblichen Verbesserung des Bauteils der elektrischen Maschine, da das Verdrillen des Flachdrahtes den resultierenden Biegeradius erheblich reduziert und somit das Risiko gemindert wird, dass die Isolationsschicht auf dem Flachdraht in diesem Bereich beschädigt wird und aufgrund der zerstörten Isolierung Kurzschlüsse oder ähnliches auftreten .

Des Weiteren ist in dem Vorschlag vorteilhafter Weise vorgesehen, dass der Flachdraht einer Drahtwicklung in der Nut des Bauteiles derart eingelegt ist, dass die kurze Querschnittseite des Flachdrahtes im Wesentlichen parallel zur Nuttiefe (also radial bei einem rotationssymmetrischen Bauteil) orientiert ist und der aus der Nut austretende Flachdraht zunächst über seine kurze Querschnittseite um ca. 30° bis 60° abgebogen ist, dann eine Verdrillung um seine Längsachse um ca. 90° aufweist, dann in diesem verdrillten Bereich um seine lange Querschnittseite um ca. 90° gebogen ist, dann eine Drillgegendrehung angeordnet ist und dann, nach einer Biegung um die kurze Querschnittseite um ca. 30° bis 60° in die nächste Nut eintaucht.

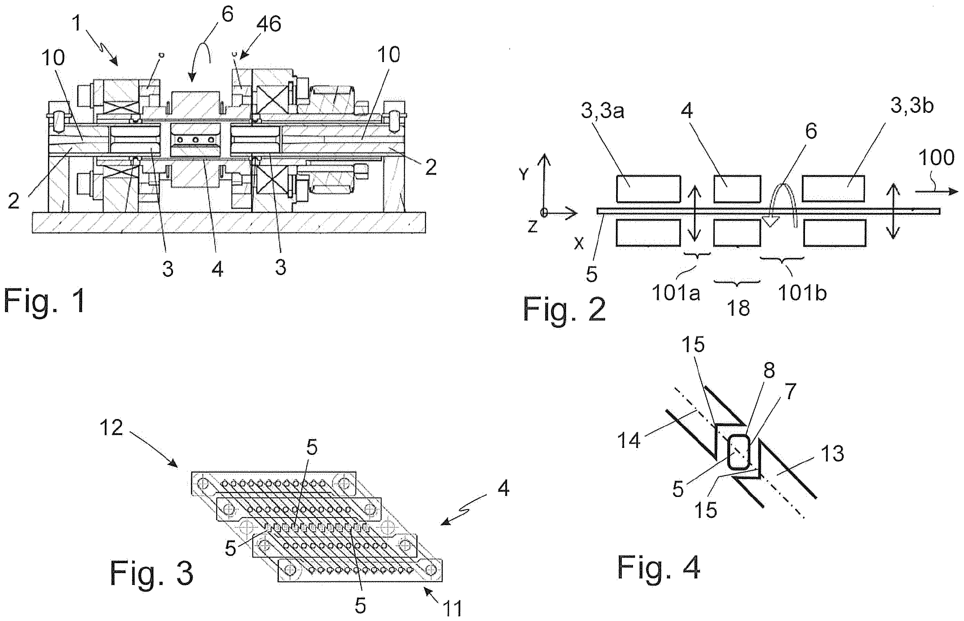

Ausgestaltungen der Erfindung umfassen daher unter anderem auch die spezielle Ausgestaltung des Drahtes in einem Stator der, nachdem er aus der Nut des Stators oder Rotors austritt, zunächst über seine hohe Kante 7 oder lange Querschnittsseite 7 (im Schnitt des Flachdrahtes gesehen) um ca. 45° gebogen ist, dann eine Verdrillung um seine Längsachse um ca. 90° erfährt, dann in diesen verdrillten Bereich um seine kurze Querschnittsseite um ca. 90° gebogen wird, dann die Drillgegendrehung angeordnet ist und dann, nach einer Biegung um die lange Querschnittsseite um 45° wieder in die Nut eintaucht. Die hier angegebenen Bezugszeichen beziehen sich auf die Figur 4, bei welchem der Draht 5 im Schnitt dargestellt ist. Mit 7 ist die hohe Kante oder lange Seite bzw. Querschnittsseite gekennzeichnet, die schmale Seite oder kurze Kante trägt das Bezugszeichen 8.

Üblicherweise besteht die in den Stator einzubauende Drahtmatte bzw. Wellenwicklung oder Drahtwicklung aus einer Vielzahl parallel angeordneter Drähte, üblicherweise 12 Drähte. Dem Fachmann ist klar, dass die hier beschriebenen Technologien, auch wenn sie für den Einzeldraht ausgeführt sind, problemlos auch für eine Drahtanordnung von mehreren, parallel verlaufenden Drähten in gleicher Weise zu verstehen ist.

Bei einer bevorzugten Ausgestaltung des Vorschlags ist vorgesehen, dass nach dem Verdrillen ein abschnittsweise Z-förmiges Abwinkeln des Flachdrahtes erfolgt.

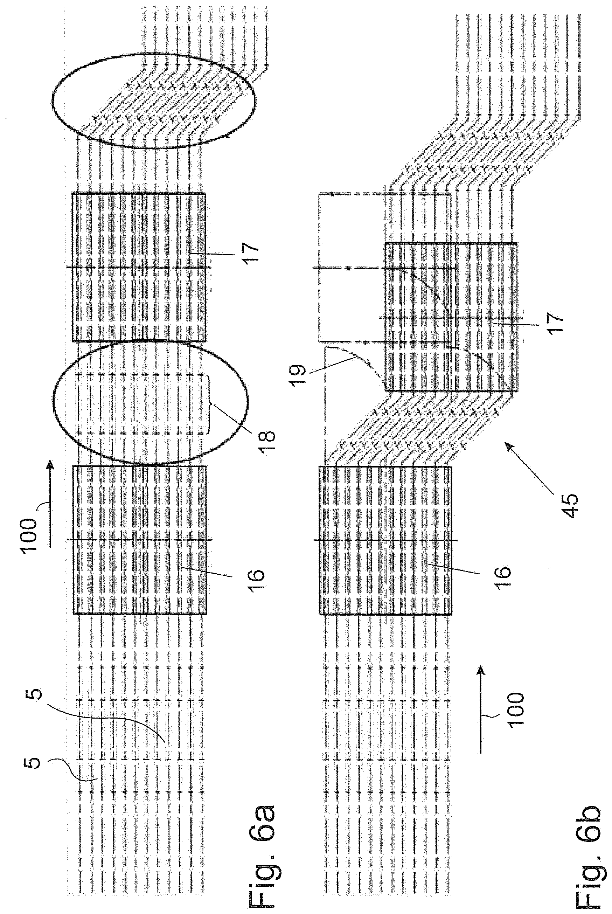

Unter einem Z-förmigen Abwinkeln versteht man die Tatsache, dass die Vielzahl von in einer gemeinsamen Drahtebene bevorzugt parallel orientierter Drähte in der Drahtebene parallel versetzt werden, wie dies zum Beispiel in Figur 6a, 6b gezeigt ist.

Des Weiteren ist vorgesehen, dass nach dem Z-förmigen Abwinkeln ein Aufwickeln, insbesondere schraubenlinienartiges Aufwickeln des Flachdrahtes auf einen Träger erfolgt und hiernach ein Übertragen der so erzeugten Drahtmatte auf ein Montagewerkzeug.

Des Weiteren ist in dem Vorschlag vorteilhafter Weise folgender Schritt vorgesehen:
Montage der Drahtmatte in dem Bauteil derart, dass die zweiten unverdrillten Drahtbereiche der Drahtmatte in Nuten des Bauteiles eingeführt werden, die zweiten unverdrillten Drahtbereiche unterschiedlicher Nuten eines Flachdrahtbereiches von einer Abwinkelung verbunden sind und die Abwinkelung zumindest teilweise den ersten unverdrillten Drahtbereich aufnimmt.

Der Vorschlag sieht mehrere Varianten vor. Zunächst ist vorgesehen, dass die Abwinkelung zumindest teilweise den ersten unverdrillten Drahtbereich aufnimmt. Das bedeutet, dass sich der erste unverdrillte Drahtbereich auch außerhalb der Abwinkelung befindet, also zum Beispiel am axialen Ende der Nut. Im Stator ist dann zum Beispiel (gegebenenfalls durch eine entsprechende Aufweitung der Nut an ihren Enden) auch der Verdrillungsabschnitt vorgesehen, der sich zwischen dem ersten und zweiten unverdrillten Drahtbereich befindet.

Alternativ ist vorgesehen, dass die Abwinkelung den ersten unverdrillten Drahtbereich vollständig aufnimmt.

Für die Ausgestaltung der Vorrichtung sind verschiedene Alternativen vorgesehen.

In einer vorteilhaften Ausgestaltung ist vorgesehen, dass die Spannvorrichtung wie auch die Verdrillvorrichtung je aus zwei zusammenwirkenden Backenteilen zum zeitweisen Festklemmen des Flachdrahtes zwischen den Backenteilen gebildet ist. Dieser Vorschlag führt zu einem diskontinuierlich laufenden Herstellungsprozess.

In einer weiteren bevorzugten Ausführungsform ist vorgesehen, dass die Spannvorrichtung wie auch die Verdrillvorrichtung, je aus zwei zusammenwirkenden, je um eine Rotationsachse rotierende Formrolle gebildet ist. Mit dieser Variante ist ein kontinuierlicher Herstellungsprozess realisierbar, geschickter Weise besitzen die Formrollen entsprechende Führungsnuten, um eine möglichst formschlüssige Führung des Flachdrahtes zu bewirken. Durch ein gemeinsames Verschwenken der Rotationsachsen der Verdrillvorrichtung wird eine Verdrillung in den Flachdraht eingearbeitet. Geschickter Weise ist vorgesehen, dass der Verschwenkwinkel 90° beträgt. Der Flachdraht ist, im Querschnitt gesehen, rechteckig. Es reicht daher eine Verschwenkung von 90°, um die kürzere Querschnittskante oder Querschnittsseite für die Biegung zu positionieren.

Bei einer bevorzugten Ausgestaltung des Vorschlags ist vorgesehen, dass sich die Verdrillvorrichtung zwischen zwei Spannvorrichtungen befindet. So wird in dem Verdrillprozess in einem Schritt, neben der ersten Verdrillung, auch gleich die Drillgegendrehung in den Flachdraht eingearbeitet.

Wie oben erläutert schlägt die Erfindung ein Verfahren für die Herstellung eines Bauteiles einer elektrischen Maschine, wie zum Beispiel eines Stators vor, mit einer aus einer Vielzahl von Drähten, insbesondere von Flachdrähten gebildeten Drahtmatte, welche folgende Schritte aufweist:
Anordnen der Vielzahl von Drähten in einer ersten Reihenfolge 1,2,3,4,...

Tauschen der Positionen der Drähte zur Bildung einer neuen, zweiten Reihenfolge 2,1,4,3,...

Zur Durchführung dieses Verfahrens umfasst die Erfindung auch eine Vorrichtung für das Ändern der Reihenfolge von einer Vielzahl nebeneinander angeordneter Drähte, insbesondere Flachdrähte, wobei in der Vorrichtung zumindest eine Auslenk- und eine Kreuzungsstation vorgesehen ist, die Auslenkstation zumindest einen Teil der Drähte in eine andere Drahtebene auslenkt und die Kreuzungsstation einen Teil der Drähte in einer Bewegung rechtwinklig zur Längserstreckung der Drähte derart versetzt, dass sich die Reihenfolge der angeordneten Drähte verändert. Dabei ist vorgesehen, dass Auslenk- und Kreuzungsstation voneinander (in Förderrichtung des Drahtes) beabstandet sind, oder in einer integrierten Auslenk-Kreuzungsstation realisiert ist.

Dabei ist der Einsatz der erfindungsgemäß vorgeschlagenen Vorrichtung und des Verfahrens sehr variabel in Bezug auf die Art und Weise wie die Drähte zugeführt werden. Die Drähte können, wie es auch in den Figuren gezeigt ist, nebeneinander, linear angeordnet sein. Es ist aber auch möglich die Drähte in mehrreihigen Gruppen oder Teilen bereit zu stellen.

Zur Durchführung dieses Verfahrens umfasst die Erfindung des Weiteren eine Vorrichtung für das Ändern der Reihenfolge von einer Vielzahl nebeneinander angeordneter Drähte, insbesondere Flachdrähte, wobei die Drähte paarweise in Drahtaufnahmen geführt sind und die Drahtaufnahmen je um eine Rotationsachse drehbar ist, die im Wesentlichen parallel orientiert ist zu der Längserstreckung der in der Drahtaufnahme geführten Drähte.

Es ist gefunden worden, dass elektrische Maschinen, zum Beispiel Statoren, bessere elektrische Eigenschaften z.B. einen besseren Wirkungsgrad aufweisen, wenn in gewissen Bereichen ein paarweiser Drahttausch vorgesehen ist. Die erfindungsgemäß vorgeschlagene Vorrichtung und das dazugehörige Verfahren führen somit zu einem verbesserten Stator.

Dabei beschränkt sich die Erfindung nicht nur auf einen paarweisen Tausch. Die vorgeschlagen Verfahren und Vorrichtungen sind geeignet, eine beliebige neue Reihenfolge der Drähte nebeneinander zu realisieren.

Die Erfindung umfasst auch ein paarweises Tauschen der Positionen der Drähte zur Bildung einer zweiten Reihenfolge 2,1,4,3,....

Des Weiteren ist erfindungsgemäß vorgesehen, dass vor dem Tauschen der Positionen der Drähte jeder zweite Draht in eine eigene Ebene ausgelenkt wird, und dann über den jeweilig ersten Draht gekreuzt wird.

Üblicherweise werden die Mehrzahl von Drähten in einer gemeinsamen Ebene geführt, ohne aber die Erfindung hierauf beschränken zu wollen. Es ist natürlich auch möglich, dass die einzelnen Drähte gruppiert oder auch gebündelt geführt werden, wenn die entsprechende Reihenfolge definiert ist. Mit Blick auf die Einbausituation in der elektrischen Maschine (z.B. im Stator) ist es jedoch günstig, dass ein Großteil der Drähte, wenn nicht sogar alle Drähte parallel, in einer gemeinsamen Drahtebene geführt werden. Um den Vertauschprozess einzuleiten, ist ein paarweiser Platzwechsel der Drahtposition vorgesehen, d.h. zumindest jeder zweite Draht wird, wie beschrieben, ausgelenkt.

Vorteilhafter Weise ist vorgesehen, dass vor, bei oder nach dem Auslenken des jeweils zweiten Drahtes in diesen Draht ein Drahtvorrat eingeformt wird. Bevorzugt wird dieser Drahtvorrat als Rundung ausgebildet, ohne die Erfindung auf diese geometrische Ausgestaltung zu beschränken. Aus diesem Drahtvorrat wird dann bei der Z-Abwicklung der Längenunterschied kompensiert.

Erfindungsgemäß ist vorgesehen, dass das Tauschen der Reihenfolge vor dem Z-förmigen Abwinkeln erfolgt.

Ein wesentlicher Vorteil der Erfindung ist darin zu sehen, dass die verschiedenen Maßnahmen, die beschrieben worden sind, auch in einem gemeinsamen Prozess bzw. in einer Anlage gemeinsam realisiert werden können. Daher umfasst die Erfindung auch eine Anlage für die Herstellung der Drahtmatte oder Drahtwicklung eines Bauteiles einer elektrischen Maschine wie zum Beispiel eines Stators, welche sowohl eine Vorrichtung für das Ändern der Reihenfolge von einer Vielzahl nebeneinander angeordneter Drähte wie auch eine Vorrichtung für die Herstellung eines abschnittsweisen verdrillten Flachdrahtes aufweist. Eine solche Anlage kombiniert die vorgenannten Vorteile und verbessert erheblich den eingangs beschriebenen Stand der Technik.

In diesem Zusammenhang wird insbesondere darauf hingewiesen, dass alle in Bezug auf die Vorrichtungen beschriebenen Merkmale und Eigenschaften aber auch Verfahrensweisen sinngemäß auch bezüglich der Formulierung der erfindungsgemäßen Verfahren übertragbar und im Sinne der Erfindung einsetzbar und als mitoffenbart gelten. Gleiches gilt auch in umgekehrter Richtung, das bedeutet, nur in Bezug auf die Verfahren genannte, bauliche also vorrichtungsgemäße Merkmale können auch im Rahmen der Vorrichtungsansprüche berücksichtigt und beansprucht werden und zählen ebenfalls zur Offenbarung.

Des Weiteren umfasst die Erfindung auch die Verwendung der Vorrichtung für die Herstellung eines abschnittsweisen verdrillten Flachdrahtes für die Herstellung einer Drahtmatte oder Drahtwicklung eines Stators. Dabei weist die Vorrichtung zumindest eine erste Spannvorrichtung auf, die in Förderrichtung des Flachdrahtes vor einer Verdrillvorrichtung angeordnet ist und die Verdrillvorrichtung relativ zur Spannvorrichtung um einen Verschwenkwinkel verschwenkbar, insbesondere um die Längserstreckung des Flachdrahtes verschwenkbar ist.

Dem Fachmann ist in diesem Zusammenhang auch klar, dass ein Bauteil einer elektrischen Maschine nicht nur der Stator oder Rotor ist, sondern zum Beispiel auch eine Drahtmatte oder Drahtwicklung.

In der Zeichnung ist die Erfindung insbesondere in einem Ausführungsbeispiel schematisch dargestellt. Es zeigen:
Fig. 1 in einer Seitenansicht eine Verdrillmaschine;
Fig. 2 in einer schematischen Ansicht die Funktionsweise der in Figur 1 gezeigten Verdrillmaschine;
Fig. 3 in einer Ansicht eine Verdrillmaschine für eine Vielzahl parallel angeordneter Drähte;
Fig. 4 ein Detail der Verdrillmaschine nach Fig. 3, insbesondere mit einem Querschnitt des Flachdrahtes;
Fig. 5a, 5b, 5c, 5d, 5e, 5f je in einer Ansicht eine Verdrillmaschine nach Fig. 3 in verschiedenen Stellungen zusammen mit dem jeweiligen Detail nach Fig. 4;
Fig. 6a, 6b das Einprägen der Z-Abwinkelung in eine Anordnung von parallel verlaufenden Drähten;
Fig. 7a, b bis 16a, b und Fig. 39 je in einer dreidimensionalen Ansicht (jeweils mit dem Figurzusatz "a") sowie Fig. 39, und in je einer Detailansicht (jeweils mit dem Figurzusatz "b") in Richtung des Pfeiles 20 (siehe zum Beispiel Fig. 7a) eine Maschine zur Herstellung der Wellenwicklung, in unterschiedlichen Positionen
Fig. 17 in einer Draufsicht eine Kombination der Maschine zur Herstellung der Wellenwicklung mit einem Aufrollautomaten;
Fig. 18 Detail nach Figur 17;
Fig. 19 in einer Draufsicht eine weitere Kombination der Maschine zur Herstellung der Wellenwicklung mit einem Aufrollautomaten;
Fig. 20 ein Detail nach Figur 19;
Fig. 21 in dreidimensionaler Ansicht und darüber angeordneter seitlicher Ansicht eine spezielle Ausgestaltung des eingesetzten Isolationspapieres;
Fig. 22,23 Übergabe der Drahtmatte von dem Übertragungswerkzeug an das Verpresswerkzeug in 2 verschiedenen Varianten;
Fig. 24 in einer dreidimensionalen Ansicht eine weitere Variante der Verdrillmaschine nach einem Ausführungsbeispiel der Erfindung;
Fig. 25a, 25b je in einer Ansicht unterschiedliche Stellungen der Verdrillmaschine nach Fig. 24;
Fig. 26a, b, c, 27a, b, c, 29a, b, c, 31a, b, c, 33a, b, c der Herstellungsprozess der Drahtwicklung nach einem Ausführungsbeispiel der Erfindung in verschiedenen Stellungen (Fig. 26, 27, 29, 31, 33) und in verschiedenen Ansichten, wobei die Figuren mit dem Zusatz "c" die Verdrillmaschine nach Fig. 24, die Figuren mit dem Zusatz "b" die parallelen Drähte in Draufsicht und mit dem Zusatz "a" die parallelen Drähte in Seitenansicht zeigen;
Fig. 28 eine Ansicht eines Details nach Fig. 26c, 27c;
Fig. 30 eine Ansicht eines Details nach Fig. 29c Fig. 32a, 32b je eine Ansicht eines Details nach Fig. 31c;
Fig. 34a, 34b je in einer Draufsicht ein Detail nach Fig. 33c;
Fig. 35a, 35b der Herstellungsprozess der Drahtwicklung (hier die Z-Abwinkelung nach Fig. 6a, 6b) nach einem Ausführungsbeispiel der Erfindung in verschiedenen Stellungen;
Fig. 36a, 36b, 36cden Stator, hergestellt mit einem Ausführungsbeispiel nach der Erfindung in einer dreidimensionalen Ansicht (Fig. 36a) und in Details hiervon in Fig. 36b, 36c;
Fig. 37a, 37b, 37c, 37d in einer Ansicht eine Figurensequenz der verschiedenen Stellungen der Vertauschstation nach einem Ausführungsbeispiel der Erfindung;
Fig. 38 in einer dreidimensionalen Ansicht die Vertauschstation nach einem Ausführungsbeispiel der Erfindung;
Fig. 39a, 39b, 39cin einer Ansicht eine Figurensequenz der verschiedenen Stellungen der Ausgleichstation nach einem Ausführungsbeispiel der Erfindung;
Fig. 40 in einer schematischen Ansicht ein Detail des erfindungsgemäß herzustellenden Bauteils

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige Lösungen darstellen.

Figur 1 zeigt eine Verdrillmaschine 1 in einer Seitenansicht. Mit 10 ist ein Durchführkanal für den Draht 5 gezeigt. Der Kanal 10 befindet sich in den Führungsbuchsen 2, die am Anfang und Ende der Maschine angeordnet sind. Mittig, zentral ist die Verdrillvorrichtung 4 vorgesehen, die gegen den eingeführten Draht anstellbare Backenteile aufweist. Der Draht 5 wird in die davor und dahinter liegende Spannvorrichtung 3 festgeklemmt, die Spannvorrichtung 3 bleibt ortsfest, während sich die Verdrillvorrichtung 4 um die Drahtlängsachse (x-Achse) um zum Beispiel 90° dreht, was mit dem gebogenem Pfeil 6 angedeutet ist.

Figur 2 zeigt diesen Ablauf schematisch. Die Verdrillvorrichtung 4 befindet sich zwischen der eingangsseitig ersten Spannvorrichtung 3,3a und der ausgangsseitigen zweiten Spannvorrichtung 3,3b. Die Förderrichtung des Drahtes 5 ist mit dem Pfeil 100 gekennzeichnet.

Sowohl die Spannvorrichtung 3 wie auch die Verdrillvorrichtung 4 weisen je zusammenwirkende Backenteile auf. Im geschlossenen Zustand dieser Vorrichtungen, wenn diese also den Draht 5 halten, verlaufen die Kanten des Flachrates jeweils zueinander parallel und auch gerade, d.h. parallel zur Längserstreckung des Flachdrahtes 5.

Sobald die Verdrillvorrichtung 4 zum Beispiel um 90° gedreht ist, bildet sich in dem Draht 5, zwischen der ersten Spannbacke 3, 3a und der Verdrillvorrichtung 4 ein erster Verdrillungsabschnitt 101a, sowie nach der Verdrillvorrichtung 4 und der zweiten Spannbacke 3, 3a ein zweiter Verdrillungsabschnitt 101b aus. Zwischen den beiden Verdrillungsabschnitten 101a und 101b entsteht dann der Verdrillungsbereich 18. Im Verdrillungsbereich 18 verlaufen die Kanten des Flachdrahtes wieder gerade und parallel zueinander, wohingegen sich die Kanten des Flachdrahtes 5 in den Verdrillungsabschnitt 101a, 101b entlang einer im Raum gebogenen Linie oder einer Schraubenlinie erstrecken.

Die Verdrillung in dem zweiten Verdrillungsabschnitt 101b ist der Verdrillung im ersten Verdrillungsabschnitt 101a entgegengesetzt und zwar in Drehrichtung und Verschwenkwinkel (bezogen auf die Längserstreckung des Drahtes), dieser zweite Verdrillungsabschnitt 101b wird im Rahmen dieser Offenbarung auch als Drillgegendrehung bezeichnet bzw. beschrieben.

Figur 3 zeigt eine Ansicht der Verdrillvorrichtung 4 einer Verdrillmaschine 1, die in der Lage ist, eine Mehrzahl von parallel angeordneten Drähte 5 um ihre jeweilige Längsachse zu verdrillen. Die Drähte 5 erstrecken sich rechtwinklig zur Zeichenebene. Die Verdrillbacke 4 besteht aus einem Unterteil 11 und einem Oberteil 12, die zueinander verschwenkbar sind. Das Unterteil 11 und das Oberteil 12 tragen jeweils Halter 13, 14 die an ihrem vorderen, einander zugewandtem Ende je eine Ausnehmung 15 aufweisen und dafür vorgesehen sind, den Draht 5 radial zu ergreifen. Dies ist insbesondere in Figur 4 gezeigt.

Figur 4 zeigt ein Detail nach Figur 3. Das Oberteil 12 ist für jeden einzelnen Draht 5 mit einem oberen Halter 14 ausgestattet, der eine rechtwinklige Ausnehmung 15 aufweist, der so gebildet ist, um den Draht 5 formschlüssig einzufassen. Das Unterteil 11 besitzt analog hierzu einen unteren Halter 13 und eine gleichartig ausgebildete Ausnehmung 15. Der hier gezeigte Draht 5 ist als Flachdraht 5 ausgebildet, d.h., sein Querschnitt ist rechteckig, wobei die einzelnen Querschnittsseiten 7,8 nicht gleich lang sind. Die lange Querschnittsseite ist mit dem Bezugszeichen 7, der kurzen Querschnittsseite mit 8 gekennzeichnet.

In Figur 3, bzw. Figur 4 ist die Verdrillvorrichtung 4 geöffnet gezeigt, d.h., die Ausnehmungen 15 liegen nicht an dem Flachdraht 5 an.

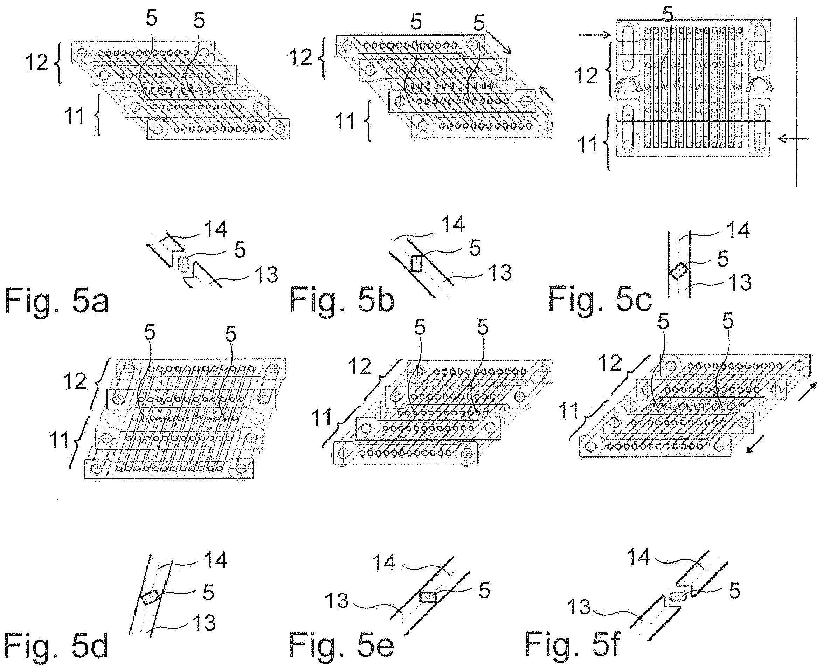

In der Abfolge der Figuren 5a, 5b, 5c, 5d, 5e, 5f ist die Prozessabfolge für das Verdrillen von mehreren, parallel angeordneten Drähte 5 gezeigt. Die Figurensequenz nach Fig. 5a, 5b. 5c, 5d, 5e, 5f umfasst Doppelbilder. Die Gesamtansicht oben entspricht der Ansicht nach Fig. 3, das Detail darunter der Ansicht nach Fig. 4. Der Aufbau ist wie in Figur 3, die Bezugszeichen gelten hier analog.

Figur 5a zeigt die Grundstellung, sie entspricht der Darstellung nach Fig. 3 und 4. Die Klemmung mit den Haltern 13, 14 ist offen.

In Figur 5b ist die Klemmung geschlossen. Der Flachdraht 5 ist formschlüssig von den beiden Haltern 13, 14 gehalten.

In Figur 5c ist eine Verdrehung von Ober- und Unterteil 11, 12 in Uhrzeigerrichtung um 45° erfolgt. Die zunächst diagonal orientierten Halter 13,14 (vergleiche Figur 5a, 5b) sind nunmehr vertikal orientiert.

In Figur 5d ist eine Verdrehung auf 60° gezeigt, in Figur 5e ist eine Verdrehung auf 90° gezeigt.

In Figur 5f ist das Verdrillen auf 90° erfolgt und die Klemmung der Halter 13, 14 ist offen. Da der Draht in vor und hinter der Verdrillvorrichtung angeordneten Spannvorrichtung ortsfest festgehalten ist, ist der Draht nunmehr hier abschnittsweise verdrillt und wird dann in Längsrichtung des Drahtes (X-Richtung) weiter getaktet.

Neben dem hier als diskontinuierlich ausgeführten Prozess ist natürlich auch ein kontinuierlicher Verdrillprozess möglich, der zum Beispiel durch mitlaufende Formscheiben mit unterschiedlicher Nutgeometrie längs des Umfanges ausgestaltet ist.

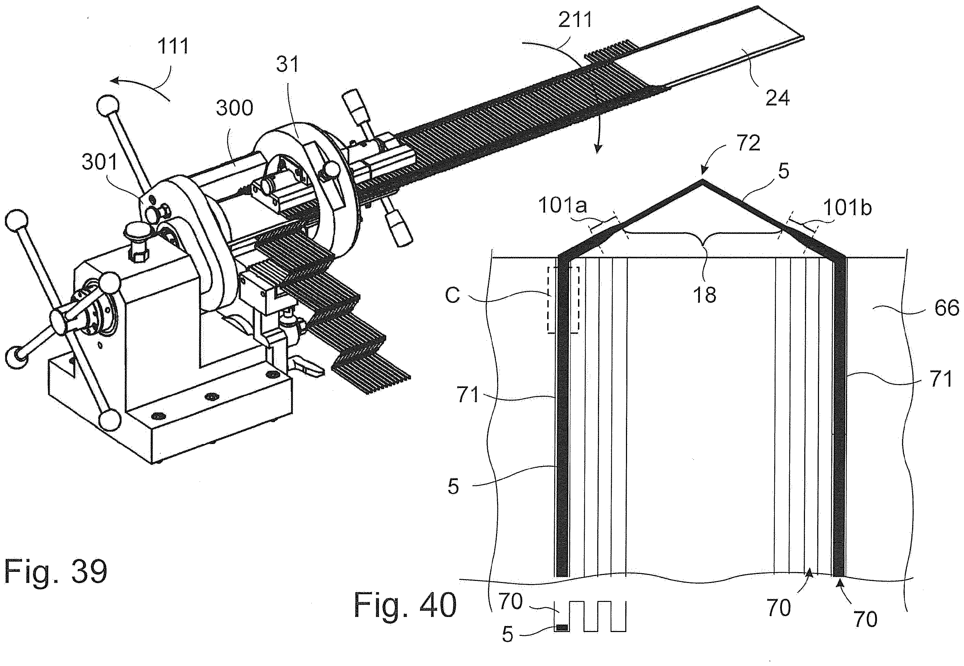

Fig. 40 zeigt in einer schematischen Ansicht ein Detail des erfindungsgemäßen Bauteils, hier einen Stator 66. Der Stator 66 ist üblicherweise ein rotationssymmetrischer Körper mit einer Vielzahl von Nuten/Innennuten 70, in die in einer radialen Nach-Außen-Bewegung die Drähte 5, genaugenommen die gerade verlaufenden Stege, bzw. zweite unverdrillte Drahtbereiche 71 eingelegt sind.

In der hier gezeigten Ansicht ist die kurze Querschnittseite des Flachdrahtes 5 im Wesentlichen parallel zur Nuttiefe (radial) orientiert und der aus der Nut 70 austretende Flachdraht 5 zunächst über seine kurze Querschnittseite um ca. 30° bis 60° abgebogen. Es schließt sich dann ein Verdrillungsabschnitt 101a an, der den Flachdraht 5 um 90° um seine Längsachse drillt. In der Ansicht verjüngt sich daher die Breite des Drahtes 5. Es schließt sich dann ein erster unverdrillter Drahtbereich 18 an, der auch den Winkel 72 von ca. 90° einschließt. Der gesamte Bereich des außerhalb der Nut 70 befindlichen Flachdrahtbereiches wird als Abwinkelung bezeichnet. Die Anordnung ist bezüglich des Winkels 72 symmetrisch, in dem Verdrillungsabschnitt 101b wird die Drillgegendrehung realisiert, dann taucht der Flachdraht 5 nach einem kleinen Bogen in die nächste Nut 70 ein.

Mit dem gestrichelten Bereich C wird angedeutet, dass sich die Verdrillungsabschnitte 101a, 101b alternativ auch im Stator 66 befinden kann. Die Nuten 70 erstrecken sich dabei über die gesamte Bauhöhe des Stators 66. Im unteren Bereich ist links schematisch die Einlegesituation des Flachdrahtes 5 in der Nut 70 gezeigt.

Figur 6a zeigt die Ausgangsposition, Figur 6b die Position nach ausgeführten Z-Versatz oder Einprägen einer Z-Abwinkelung

Die Anordnung von parallelen Drähten 5 wird in einer ersten Spannbacke 16 und einer hiervon in Förderrichtung 100 des Drahtes 5 beabstandeten zweiten Spannbacke 17 festgehalten. Es ist klar, dass die gezeigten Spannbacken 16, 17 jeweils aus zwei zusammenwirkenden Teilbacken bestehen, die, je nach ihrer Stellung zueinander, zwischen sich der Draht 5 festhalten oder freigeben.

Die Anordnung der Enden der Spannbacke 16, 17 zueinander ist dabei so, dass zwischen ihnen ein verdrillter Bereich 18 der Drähte 5 liegt, der nicht von einer Spannbacke festgehalten ist.

Zur Einprägung der Z-Abwinkelung wird dann die zweite Spannbacke 17 um eine Schwenkachse, die rechtwinklig auf den Drähten 5 und rechtwinklig auf der Zeichenebene steht, um eine Verschwenkbewegung 19 geschwenkt, wobei die Ausrichtung der zweiten Spannbacke 17 parallel zur Ausrichtung der ersten Spannbacke 16 verbleibt. Das bedeutet, dass der durch die zweite Spannbacke 17 gehaltene Drahtbereich weiterhin parallel ist zu dem Bereich der Draht 5, die in der Spannbacke 16 gehalten sind.

Dieser Z-Versatz definiert letztendlich den Nutsprung, den der jeweilige Draht 5 überwindet, wenn er im eingebauten Zustand aus der ersten Nut des Stators auftaucht und dann einer gewissen Entfernung von dieser ersten Nut in eine zweite Nut wieder eintaucht.

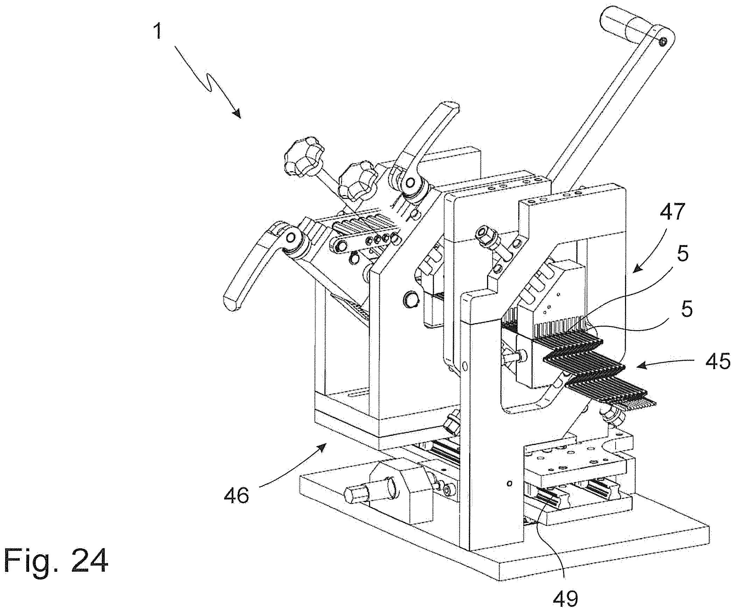

In Figur 24 ist eine weitere Variante der Verdrillmaschine 1 nach einem Ausführungsbeispiel der Erfindung gezeigt. Die hier gezeigte Verdrillmaschine 1 ist als manuell zu betätigende Vorrichtung ausgelegt, das gleiche Prinzip lässt sich aber auch in einer automatisierten Maschine mit entsprechender Steuerung realisieren. Die hier gezeigte Verdrillmaschine 1 besteht zum einen aus der Verdrillstation 46, die für das Verdrillen der Drähte 5 (vergleiche Figur 5a bis 5f) dient. Des Weiteren weist die Verdrillmaschine 1 auch eine Abwinkelungsstation 47 auf, die in Förderrichtung 100 des Drahtes 5 nach der Verdrillstation 46 vorgesehen ist und für das Einprägen der Z- Abwinkelung (vergleiche Figur Ziffer 6) verantwortlich ist.

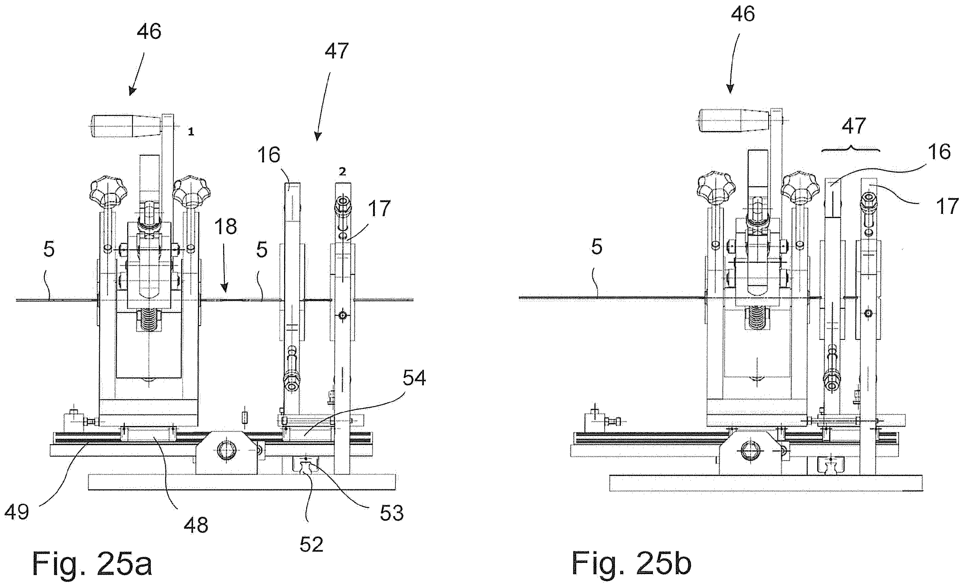

Fig. 25a, 25b zeigen je in einer Ansicht unterschiedliche Stellungen der Verdrillmaschine nach Fig. 24. In Fig. 25a ist gut zu sehen, dass die Verdrillstation 46 über den Schlitten 48 auf einer Führungsbahn 49 beweglich (manuell oder motorisch angetrieben) gelagert ist. Die hieraus resultierende Beweglichkeit ist im Wesentlichen parallel zu der Längserstreckung der Drähte 5 und somit auch zu deren Förderrichtung 100. Auf dieser Führungsbahn 49 sitzt auch die bewegliche Spannbacke 16 der Abwinkelungsstation 47, hierzu ist der Schlitten 54 vorgesehen.

Die Abwinkelungsstation 47 besitzt neben der beweglichen Spannbacke 16 auch eine feste Spannbacke 17, wobei sich die bewegliche Spannbacke 16 zwischen der feststehenden Spannbacke 17 und der Verdrillstation 46 befindet.

Genau genommen ist eine Kreuztischführung vorgesehen. Die bewegliche, erste Spannbacke 16 und die Verdrillstation 46 sind über die Führungsbahn 49 auf dem Schlitten 53 gelagert, der auf einer Führungsbahn 52 bewegbar und positionierbar ist, wobei die Längserstreckung der Führungsbahn 52 rechtwinklig ist zur Längserstreckung der Führungsbahn 49. Gegenüber dieser Kreuztischführung ist die feststehende Spannbacke 17 ortsfest. In der Verdrillstation 46 bleiben die Drähte 5 nach dem Verdrillen geklemmt. Nun wird die Verdrillstation 46 in Richtung der feststehenden Spannbacke 17, bis zum Anschlag verschoben, wobei die feststehende Spannbacke 17 hierbei die Drähte 5 nicht klemmt, also geöffnet ist. Anschließend wird die feststehende Spannbacke 17 geklemmt, die Verdrillstation geöffnet (gibt die Drähte 5 frei) und wieder in die Ausgangsposition nach Figur 25 a zurückgeschoben. Die bewegliche Spannbacke 16 ist dabei geöffnet.

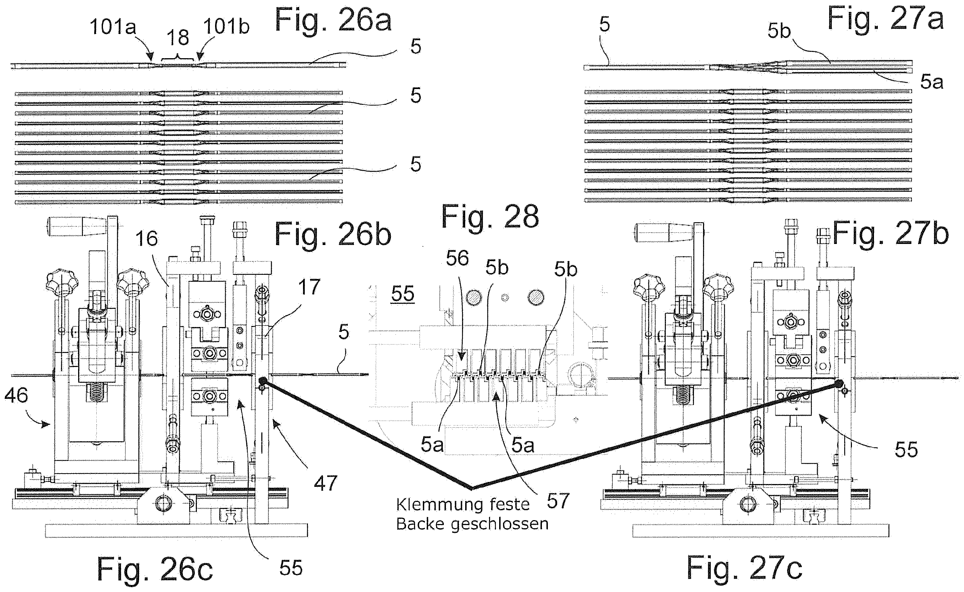

Figur 26 c zeigt eine Ausgestaltung der Verdrillmaschine 1 gemäß dem Ausführungsbeispiel der Erfindung. Zwischen der feststehenden Backe 17 und der beweglichen Backe 16 befindet sich die Vertauschstation 55. Aufgabe der Vertauschstation 55 ist, die Reihenfolge bzw. Positionen der Drähte 5 paarweise gezielt zu kreuzen oder zu tauschen. Die Figurensequenz nach Figur Fig. 26, 27, 29, 31, 33 zeigt diesen Positionstauschprozess. Dabei besteht die Vertauschstation 55 aus einer oberen Drahtklemmung 56 und einer unteren Drahtklemmung 57, wie dies insbesondere in Figur 28 zu sehen ist, wo eine Ansicht in Blickrichtung der Drähte 5 gezeigt ist. Zu beachten ist, dass die Vertauschstation 55 zwischen der festen Spannbacke 17 und der beweglichen Spannbacke 16 nur bei Bedarf (manuell) eingesetzt wird, oder, bei einer automatisch laufenden Maschine zeitlich beschränkt an die Drähte 5 angestellt wird.

In der Figurensequenz nach Figur Fig. 26, 27, 29, 31, 33 zeigen die Figuren verschiedene Ansichten, wobei die Figuren mit dem Zusatz "c" die Verdrillmaschine nach Fig. 24, die Figuren mit dem Zusatz "b" die zwölf parallelen Drähte in Draufsicht und mit dem Zusatz "a" die zwölf parallelen Drähte in Ansicht.

In Fig. 26 a sind die beiden Verdrillungsabschnitte 101 a und 101 b markiert, in welchen die seitlichen Kanten des Flachdrahtes 5 auf einem Winkelbogen von 90° einer Schraubenlinie folgen. Zwischen den beiden Verdrillungsabschnitten 101 a und 101 b befindet sich der Verdrillungsbereich 18.

In Figur 28 sind gut die verschiedenen Drähte 5a, 5b gezeigt. Durch das Zusammenfahren der oberen und unteren Drahtklemmung 56,57 werden der erste, dritte, fünfte, siebte, neunte und elfte Draht 5a nach unten gebogen, der zweite, vierte, sechste, achte, zehnte und zwölfte Draht 5b nach oben. Das Resultat dieses Vorganges ist in Figur 27 a zu sehen, wo nunmehr rechts die zunächst eingangsseitig in einer Ebene befindlichen Drähte 5 in zwei Teilebenen der Drähte 5a und 5b aufgeteilt sind. Nachdem diese Auslenkung oder Verbiegung stattgefunden hat werden die Drähte 5 in der Drahtklemmung 56,57 geklemmt. Zu beachten ist, dass hierbei die feststehende Backe 17 geschlossen ist, also auch hier die Drähte 5 geklemmt sind.

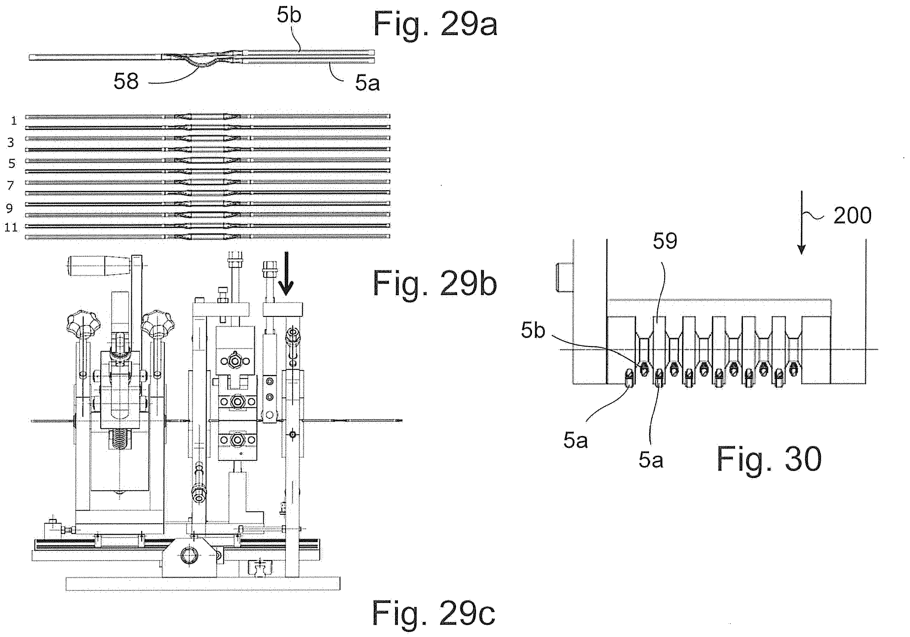

In Figur 29 a, b, c ist der nächste Schritt gezeigt. In die unteren Drähte 5a (von links nach rechts der erste, dritte, fünfte, siebte, neunte und elfte Draht 5a der anfangs zwölf parallel geführten Drähte 5) werden durch Drücken in senkrechter Richtung (siehe Pfeil 200) zur Längserstreckung der Drähte 5 mit einer Rolle 59 (siehe Figur 30) je eine Rundung 58 eingeformt. Damit soll, nach dem paarweisen Tausch der Drähte, vor der Z -Verschwenken eine Ausweichmöglichkeit dieser Drähte bzw. Drahtvorrat vorgesehen werden. Die Rolle 59 besteht dabei aus einer Vielzahl von Scheiben unterschiedlichen Durchmessers, die abwechselnd auf einer gemeinsamen Welle aufmontiert sind. Jede Scheibe ist einem Draht 5 zugeordnet, wobei die Scheiben mit dem großen Durchmesser für die Einprägung der Rundung 58 vorgesehen sind, wohingegen die Scheiben mit dem kleinen Durchmesser keine Einformung in dem Draht 5 vornehmen, sondern nur zu dessen Führung dienen.

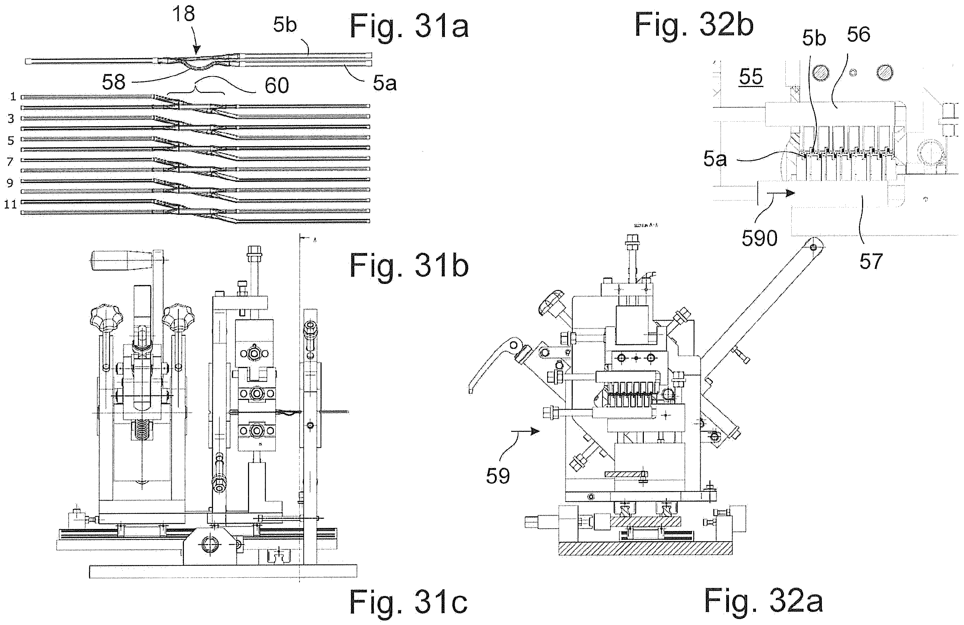

Der paarweise Leitertausch ist am besten in Figur 32b, was eine Detailansicht der Ansicht nach Figur 32a ist, beschrieben. Figur 32b zeigt die Vertauschstation 55, bei welchem die obere Drahtklemmung 56 und untere Drahtklemmung 57 die Drähte 5a, 5b der oberen und unteren Ebene festhalten. Nun wird die untere Drahtklemmung 57 relativ zur oberen Drahtklemmung 56 entlang des Pfeiles 590 bewegt, dabei ist die Richtung des Pfeiles 590 nach rechts im Wesentlichen rechtwinklig zu der Längserstreckung der Drähte 5a, 5b. Der Versatz in Richtung des Pfeiles 590 entspricht dabei gerade zweimal dem Drahtabstand der eingangs parallel liegenden Drähte 5, wodurch sich ein Leitertausch ergibt.

Das Ergebnis dieses Verschiebens ist in Figur 31b zu sehen, wo gerade im Verdrillungs- oder Verdrillbereich 18 nun auch eine Kreuzung der benachbarten Drähte 5a und 5b erfolgt. Dieser Kreuzungsbereich ist mit dem Bezugszeichen 60 gekennzeichnet. Es kreuzen sich hier der erste und der zweite Draht, sowie der dritte und vierte Draht, sowie der fünfte und sechste Draht, sowie der siebte und achte Draht, sowie der neunte und zehnte Draht und der elfte und zwölfte Draht. Die Nummerierung der einzelnen Drähte 5 ist in Figur 31b links angegeben.

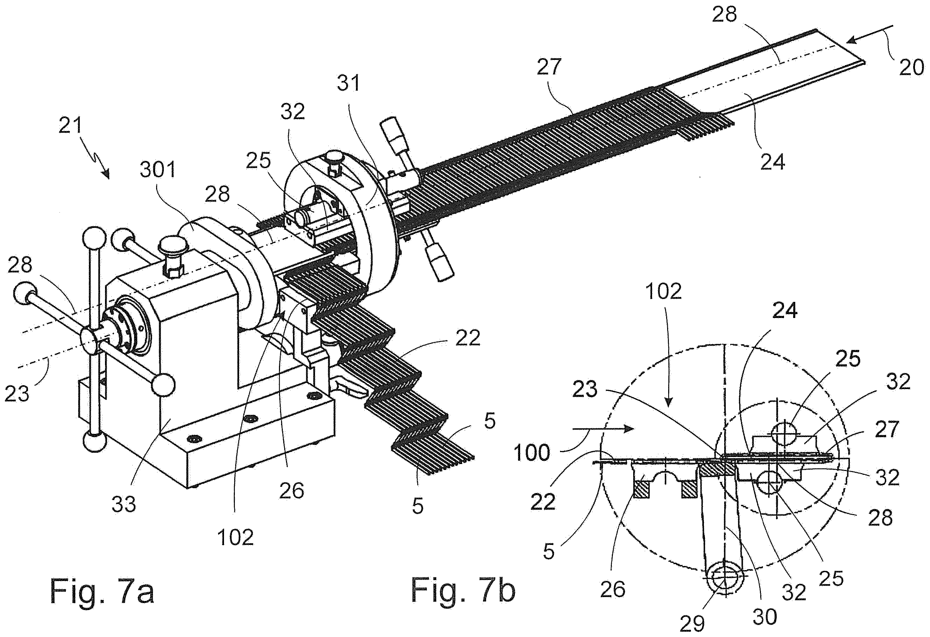

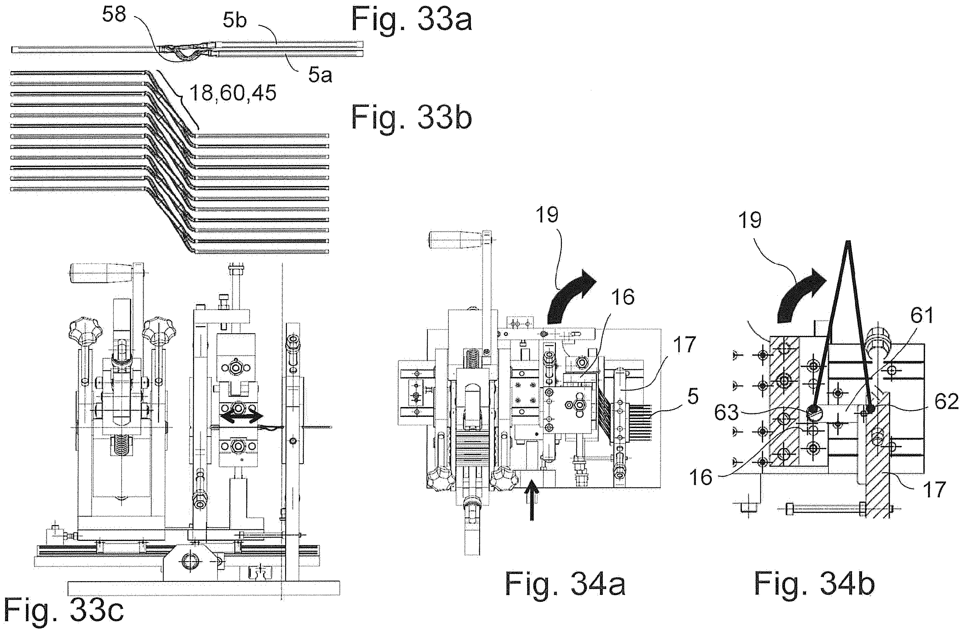

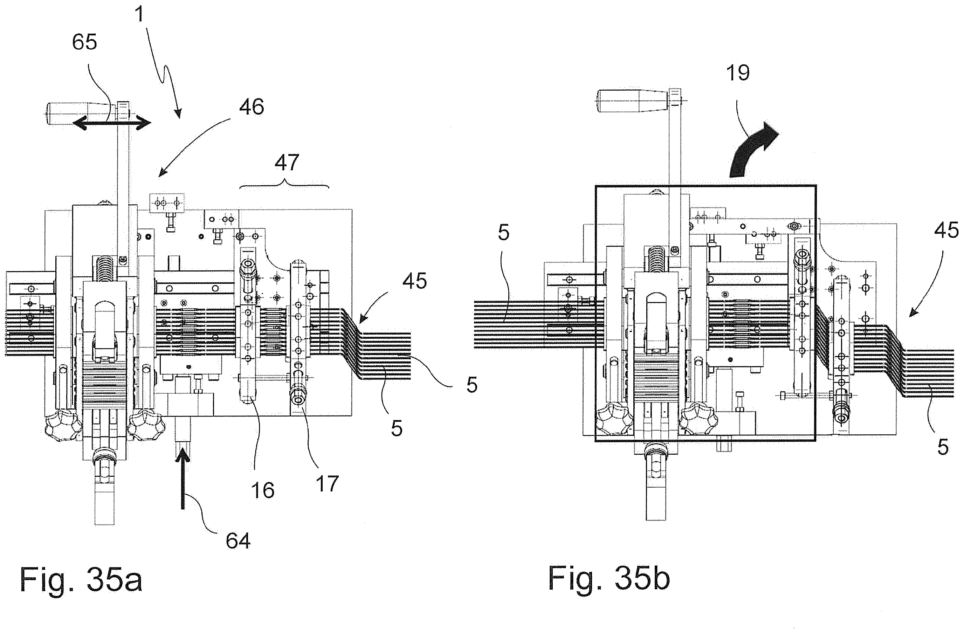

In dem Verdrillbereich 18, der auch gleichzeitig Kreuzungsbereich 60 ist, wird nun auch noch die Z-Abwinkelung 45 eingearbeitet, wie dies zum Beispiel in Figur 33 b gezeigt ist. Dies wird dadurch erreicht, dass die bewegliche Spannbacke 16 zusammen mit der Verdrillstation 46 in einer kreisförmigen Verschwenkbewegung 19 in Uhrzeigerrichtung geschwenkt wird, was aufgrund der Kreuzschlittenführung (siehe Figur 25 a) problemlos möglich ist. Damit tatsächlich eine kreisförmige Verschwenkbewegung 19 resultiert ist zwischen der feststehenden Spannbacke 17 und der beweglichen Spannbacke 16 ein beweglich gelagerter Lenker 61 vorgesehen, der sich in jeweiligen Drehpunkte 62 (in der feststehenden Spannbacke 17) und 63 (in der beweglichen Spannbacke 16) abstützt, siehe Figur 34 b. Auf den ersten Blick erscheint es aufwändig, einen großen Teil der Verdrillmaschine 1 verschwenkbar zu lagern. Die bietet aber den Vorteil, dass die parallelen Drähte 5 rechts, am Ende der Verdrillmaschine 1 (siehe z.B. Fig. 35 a) , nach der Abwinkelungsstation 47 immer an der gleichen Position die Verdrillmaschine 1 verlassen, was das nachfolgende Aufwickeln dieses Drahtpaketes auf das Schwert 24 (siehe zum Beispiel Figur 7 linke, große Teilfigur) erheblich erleichtert.

Da die Drähte 5a und 5b ja nun in unterschiedlichen Ebenen geführt sind liegen auch deren Drehpunkte zur Ausbildung der Z-Abwinkelung nicht an der gleichen Stelle. Hieraus resultiert bei einem Vergleich der Ausgestaltung der Rundung 58 nach Figur 33a und der Rundung 58 nach Figur 31a eine gewisse Änderung nämlich, dass die Rundung 58 nach Figur 33a größer d.h. stärker gebeult ist, in diese Rundung 58 wurde der Längenunterschied der aus der Verschränkung (und damit verbundenen Stauchung der unteren Drähte 5a ) resultiert, kompensiert.

Figur 35 a zeigt die Verdrillmaschine 1 nochmals ohne die eingesetzte Vertauschstation 55. Es ist ein Vorzug des Vorschlages, dass die Verdrillmaschine 1 bei Bedarf um die Vertauschstation 55 ergänzt werden kann, um, wenn benötigt, den Drahtvertauschprozess durchführen zu können. Dieser wird aber nur selten benötigt, weswegen bei der Vielzahl von einzuarbeiten Z- Abwinkelungen, die Vertauschstation 55 nicht immer benötigt wird. Die feststehende Spannbacke 17 ist auf dem Gestell ortsfest angeordnet, gegenüber dem Gestell ist der übrige Teil der Verdrillmaschine 1, insbesondere die Verdrillstation 46 und die bewegliche erste Spannbacke 16 auf der Kreuztisch-Anordnung beweglich, diese Beweglichkeit ist durch die beiden rechtwinkligen Pfeile 64 und 65 angedeutet, die, wenn sie geschickt überlagert sind und durch, zum Beispiel einen Lenker 61 geführt sind, zu der Verschwenkbewegung 19 (siehe Figur 35 b) führt.

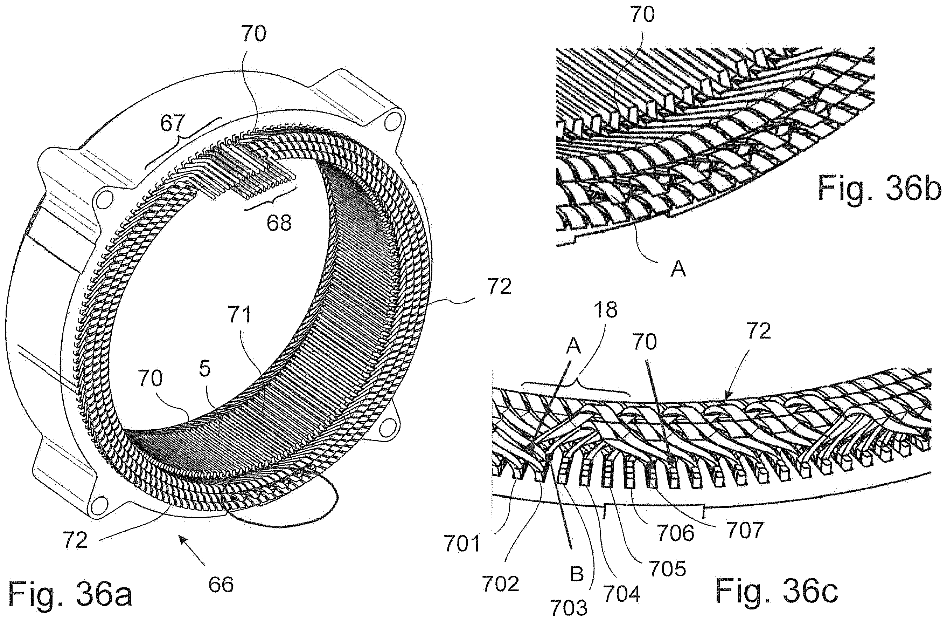

In Figur 36a ist ein Stator 66 einer elektrischen Maschine schematisch dargestellt. Der ringförmige Stator 66 ist mit einer Vielzahl von (Innen) -Nuten 70 ausgestattet, in die die Drähte 5 in mehreren Lagen übereinander eingelegt sind. Die Drähte 5 werden dabei als Drahtwicklungen eingelegt, wobei die Drahtwicklungen jeweils aus Stegen 71 bestehen, die in die Nuten 70 eingelegt sind und an jeweiligen axialen Enden durch eine giebeldachartige Abwinkelung 72 den Nutsprung zur nächsten Nut 70 ausführen. Dabei ist vorgesehen, dass die Drahtwicklung zwei Anschlussbereiche 67,68 aufweist, die entsprechende Anschlussmöglichkeit ermöglichen.

Die Drahtwicklung besteht hierbei aus zwölf parallel verlaufenden Drähten 5, hieraus resultiert, dass auch die Anschlussbereiche 67,68 jeweils zwölf Drahtenden aufweisen. Die Drahtwicklung wird dabei als Ganzes in drei Reihen in den Stator 66 eingesetzt, die dazu führen, dass jeweils sechs Stege 71 in einer Nut 70 angeordnet sind.

Die normale (überwiegende) Drahtanordnung ist dabei derart (siehe Fig 36b und c was eine Vergrößerung des elliptischen Bereiches nach Fig 36a ist) , dass der erste Draht A aus der ersten Nut 701 aus einer ersten radialen Schicht austaucht, dann ( wie alle andern Drähte auch) eine giebeldachartige Abwinkelung 72 ausbildet, um dann sechs Nuten später in Nut 707 in einer zweiten radialen Schicht wieder einzutauchen, wobei die zweite radiale Schicht einen kleineren Durchmesser aufweist wie die erste radiale Schicht. Im Bereich der giebeldachartigen Abwinkelung 72 befindet sich der jeweilige Verdrillungsbereich 18 des jeweiligen Drahtes 5, der sich insbesondere über den gesamten Kopfbereich der giebeldachartigen Abwinkelung 72 (oder auch nur Teile davon) erstrecken mag, aber nicht den in die Nut einstehenden Steg berührt. Der zweite Draht B (und alle anderen der zwölf Drähte) werden so verbaut.

Für eine Verbesserung des Wirkungsgrades einer so aufgebauten elektrischen Maschine ist bereits gefunden worden, dass ein einmaliger paarweise Drahtwechsel oder Drahttausch in dem Stator mittig, also ca. zur Hälfte der Drahtwicklung vorzusehen ist. Im Stand der Technik ist es hierzu bekannt, die Drähte aufzutrennen und dann, neu sortiert, wieder zu verbinden, zum Beispiel zu verschweißen. Solch ein Vorgehen ist denkbar aufwändig und auch fehlerträchtig und bedingt hiernach auch noch einen zusätzlichen Isolationsschritt!

Geschickter Weise kann aber diese Drahtkreuzung oder Drahttausch bei der geschickten Produktion der Drahtwicklung selber mit eingebaut werden, wofür die vorbeschriebenen Verfahrensschritte dienen und zu einem besonderen Gepräge einer solchen Stators 66 führen, der diesen Leitungstausch realisiert, ohne dabei die jeweiligen Drähte zu trennen.

Bei dem mittig vorzusehenden paarweisen Drahttausch taucht dabei beispielhaft der Draht A wiederum aus der Nut 701 aus, taucht aber dann nicht, wie üblich, in die Nut 707 wieder ein, sondern erst in der Nut 708, die bislang von dem zweiten Draht B belegt wurde. Der Draht B taucht aus der Nut 702 aus und taucht dann bereits wieder in der Nut 707 ein. Der Eintauchprozess erfolgt dabei in einer anderen, zweiten radialen Schicht als das Auftauchen in der ersten radialen Schicht unter der Bedingung, dass die zweite radiale Schicht einen kleineren Durchmesser aufweist wie die erste radiale Schicht . Es ergibt sich somit, dass in dem Verdrillbereich 18 auch der Kreuzungsbereich 60 ist, wobei dabei der Draht A den Draht B in axialer Ansicht fast vollständig verdeckt.

Zur Verbesserung der elektrischen Eigenschaften ist für die zwölf Drähte ein ein- oder auch zweimaliger, jeweils paarweise Drahttauschbereich aller Drähte pro Stator 66 vorgesehen. Insbesondere befindet/en sich der oder die Drahttauschbereich/e auf der dem Anschlussbereich 67, 68 gegenüberliegenden Statorbereich. Insbesondere befindet sich der Drahttauschbereich auch im mittleren Bereich der Schichten der Drahtwicklung, zum Beispiel in der dritten und vierten Schicht von insgesamt sechs Schichten. In diesem Beispiel mit zwei Drahttauschbereichen befinden sich dazwischen Drahttauschbereiche mit herkömmlichen, wie oben beschriebenen normalen Drahtanordnungen.

Als Schicht wird dabei die radiale Lage eines Drahtes oder Steges 71 in der Nut 70 verstanden.

Auf die vorbeschriebene Ausgestaltung ist die Erfindung aber nicht zu beschränken. Es können auch mehrere solcher Drahttauschbereiche pro Stator vorgesehen seien. Diese können sich mit der herkömmlichen, oben beschriebenen normalen Drahtanordnungen beliebig abwechseln.

Die Figurensequenz 37 a, 37 b, 37 c, 37 d zeigt eine alternative Ausgestaltung einer Vertauschstation 55. Die hier gezeigte Variante der Vertauschstation 55 besteht aus einer Anzahl, hier insbesondere linear, nebeneinander angeordneter Drahtaufnahme 74, die dazu dienen, die Drähte 5 jeweils paarweise aufzunehmen und zu führen. Es sei angemerkt, dass die Anordnung der Drahtaufnahmen 54 erfindungsgemäß sehr variabel ist, also nicht auf die hier gezeigte gerade, lineare Anordnung beschränkt ist. Es sind auch mehrreihige oder auch kreisförmige Anordnungen denkbar. Die Drahtaufnah- men 54 sind um eine Rotationsachse drehbar, die im Wesentlichen parallel orientiert ist zur Längserstreckung der in den Drahtaufnahmen 54 geführten Drähte. Sind insgesamt sechs Drahtaufnahmen 54 gezeigt, die je zwei Drähte 5 aufnehmen, wobei auch die Anzahl der Drähte, die pro Drahtaufnahme geführt werden, nicht erfindungsgemäß beschränkt ist. Es ist auch denkbar, dass die beschriebenen Vertauschstationen in Förderrichtung der Drähte mehrfach hintereinander angeordnet werden und so beliebige Drahtsprünge möglich sind.

Die hier gezeigten zwölf Drähte sind einzeln durchnummeriert mit den arabischen Ziffern 1-12. Durch diese Nummerierung ist auch gut erkennbar, wie sich die Reihenfolge der Drähte untereinander durch den Einsatz der vorgeschlagenen Vertauschstation 55 (siehe Figurensequenz 37a, 37b, 37c, 37d) verändert.

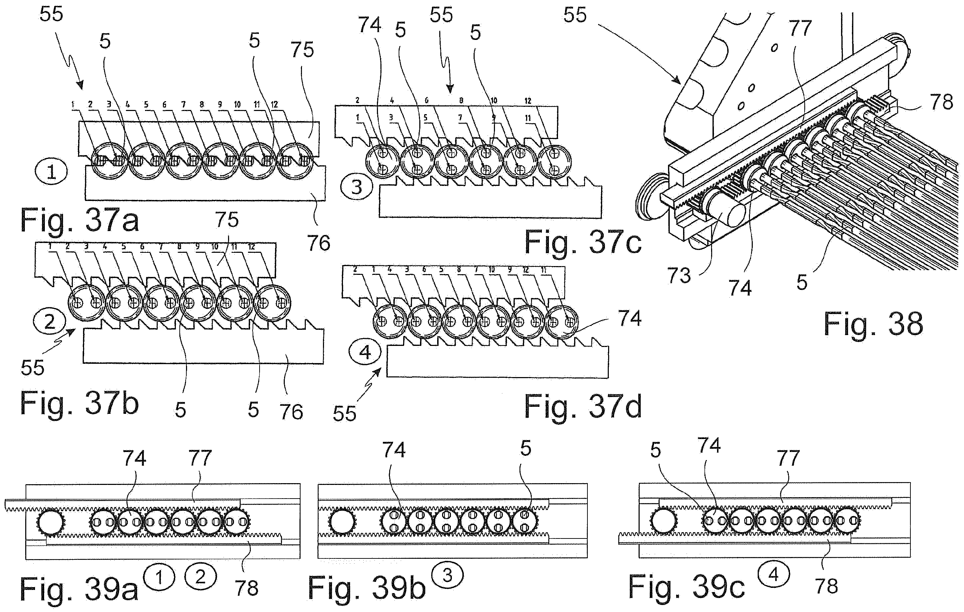

Des Weiteren besitzt die Vertauschstation 55 zwei aufeinander zuführbare Klemmenbacken 75,76, die eine Sägezahnstruktur aufweisen und so zwischen sich in der Klemmsituation die Drähte 5 festlegen (siehe zum Beispiel Figur 37 geschlossen, in Fig 37 geöffnet).

Durch die Vertauschstation 55 werden die Drähte paarweise vertauscht, daher besitzt die Vertauschstation 55 sechs Drahtaufnahmen 74, die je ein Drahtpaar aufnehmen können. Die Drahtaufnahmen 74 der Vertauschstation 55 besitzen je eine zylindrische Form mit Außenverzahnung und befinden sich zwischen zwei Zahnstangen 77 und 78 durch einen gemeinsamen Zentralantrieb 73 die gegeneinander verschiebbar sind und so eine Drehbewegung der einzelnen Drahtaufnahmen 74 ermöglichen (siehe z.B. Fig 39 a, b, c ) , wodurch die Vertauschbewegung realisiert werden können.

Die Bewegung der Drahtaufnahmen 54 der Vertauschstation 55 erfolgt bevorzugt synchron und wird durch die nachfolgende Tabelle mit Bezug auf die Figurensequenz 37 a, 37 b, 37 c, 37 d bzw. die Figurensequenz 39 a, 39 b, 39 c beschrieben. Die jeweiligen Stellungen sind mit arabischen Ziffern 1-4 im Kreis gekennzeichnet.

| | **Vertauschstation** | | |
|---|---|---|---|
| Stellung | Figur | Drähte | Rotation |
| 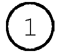 | 37a, 39a | gehalten | 0° |
| 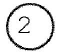 | 37b, 39a | frei | 0° |
| 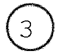 | 37c, 39b | frei | 90° |
| 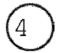 | 37d, 39c | frei | 180° |

In Fig. 7 a, b bis 16 und Fig. 39 ist je in einer dreidimensionalen Ansicht und einer Detailansicht in verschiedenen Positionen bzw. Stellungen eine Maschine 21 zur Herstellung der Wellenwicklung bzw. Drahtmatte gezeigt. Mit dieser Maschine 21 wird aus der z-förmig gebogenen Drahtanordnung, wie sie in Figur 6b gebildet ist, eine Drahtmatte oder ein Drahtpaket hergestellt.

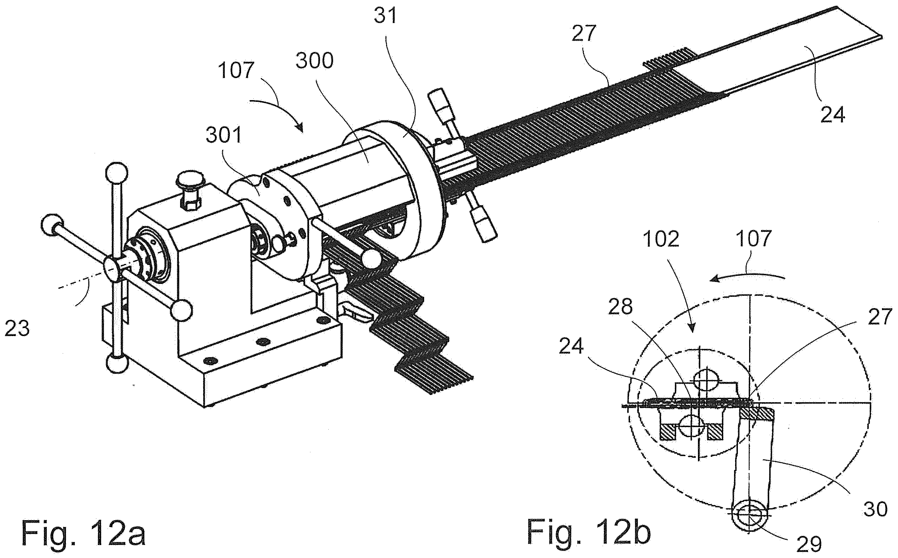

Der prinzipielle Aufbau dieser Maschine 21 ist mit Hilfe von Figur 7 a, b beschrieben. Sie ist hier als handbetätigbare Maschine gezeigt, sie ist aber in gleicher Weise auch mit steuerbaren Antrieben und mit einer, die verschiedenen Bewegungen kontrollierenden Maschinensteuerung realisierbar. Aufgabe dieser Maschine 21 ist es, aus der, mit Z - Abwinkelungen ausgestatteten Drahtanordnung 22 eine Drahtmatte oder Drahtpaket 27 zu erzeugen, die man sich als entlang einer Schraubenlinie, auf einem schwertartigen Träger 24 aufgewickelt, aus parallelen Drähten 5 bestehenden Drahtanordnung 23 vorstellen kann. Der Träger bzw. das Schwert 24 besitzt eine längs verlaufende Schwertdrehachse 28. Das Schwert 24 wird umgeben von einem Ringhalter 31, der an Führungsstangen 25 gelagert Spannbacken 32 trägt. Diese Spannbacken 32 sind auf der Ober- und Unterseite des Schwertes 24 vorgesehen und drücken die aufgewickelte Drahtpaket 27 gegen das Schwert 24. Der Ringhalter 31 ist über eine Brücke 300 mit dem Ringehaltergegenteil 301 verbunden. Die Brücke 300 ist besser in Figur IIa oder Figur 12a zu sehen, in Figur 7a ist diese von dem Schwert 24 verdeckt.

Die gesamte Anordnung von Schwert 24 und Ringhalter 31 ist an dem Gestell 33 nochmals um eine zentrale Drehachse 23 drehbar gelagert. Die zentrale Drehachse 23 und die Schwertdachse 28 des Schwertes 24 verlaufen parallel, zueinander versetzt und im gezeigten Anwendungsbeispiel zum Beispiel horizontal. Die gesamte Anordnung besteht aus Schwert 24, Ringhalter 31 mit Spannbacken 32 und Führungsstangen 25, Brücke 300 und Ringehaltergegenteil 301, wobei die Spannbacken 32 mit dem Schwert 24 gegen-über dem Ringhalter 31 um die Schwertdrehachse 28 drehbar ist. Die Drehlagerung erfolgt dabei im Ringhalter 31 und Ringehaltergegenteil 301.

In Förderrichtung 100 der Drahtanordnung 22 vor dem Schwert 24 befindet sich auf der Unterseite der Drahtanordnung 22 ein Druckstück 30, das um eine Drehachse 29 verschwenkbar und von unten gegen die Drahtanordnung 22 anstellbar ist. Die Drehachse 29 des Druckstückes 30 verläuft parallel zu der Schwertdrehachse 28 bzw. der zentralen Drehachse 23. Eine Verbindungslinie zwischen der zentralen Drehachse 23 und der Drehachse 29 des Druckstückes 30 schließt mit einer Verbindungslinie zwischen der zentralen Drehachse 23 und der Schwertdrehachse 28 einen rechten Winkel ein. Dieser Winkel kann im Rahmen dieser Offenbarung allgemein auch in einem Bereich zwischen 70° und 110°, bevorzugt zwischen 80° und 100° liegen.

Im Eingangsbereich 102 befindet sich vor dem Druckstück 30 noch eine temporäre Führungsbacke 26.

Die gezeigte Bildersequenz der Figuren 7 des 16 zeigen verschiedene Stellungen dieser Maschine 21 wobei nachfolgend immer nur auf die Veränderungen eingegangen wird, die Bezugszeichen gelten entsprechend.

Figur 7 a, b (Position 1) zeigt die Ausgangsposition, wie eingangs beschrieben.

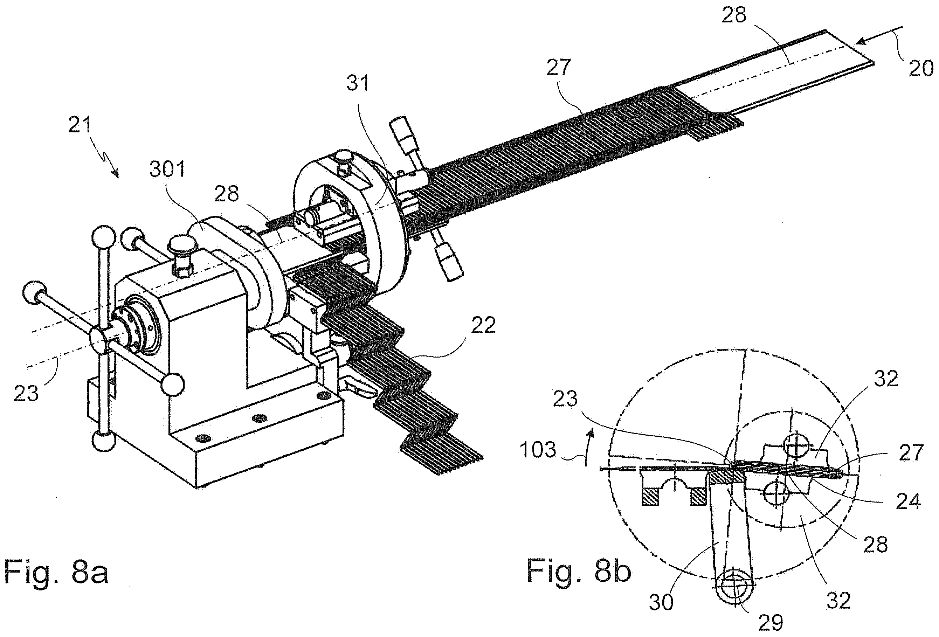

Figur 8 a, b zeigen Position 2, die gesamte Anordnung ist um die zentrale Drehachse 23 in Uhrzeigerrichtung überbogen (Pfeil 103), um ein Rückfedern der aufgewickelten Drahtmatte 27 zu minimieren. Die Spannbacken 32 pressen das Drahtpaket 27 gegen den Träger 24. Die Drehachse 29 des Druckstückes 30 und auch die Lage des Druckstückes 30 bleibt während der Rotation um die zentrale Drehachse 23 unverändert ortsfest, diese wurden nicht geschwenkt. Hierbei ist die Schwertdrehachse 28 arretiert, d.h. es erfolgt keine Relativbewegung zwischen der zentralen Drehachse 23 und der Schwertdrehachse 28.

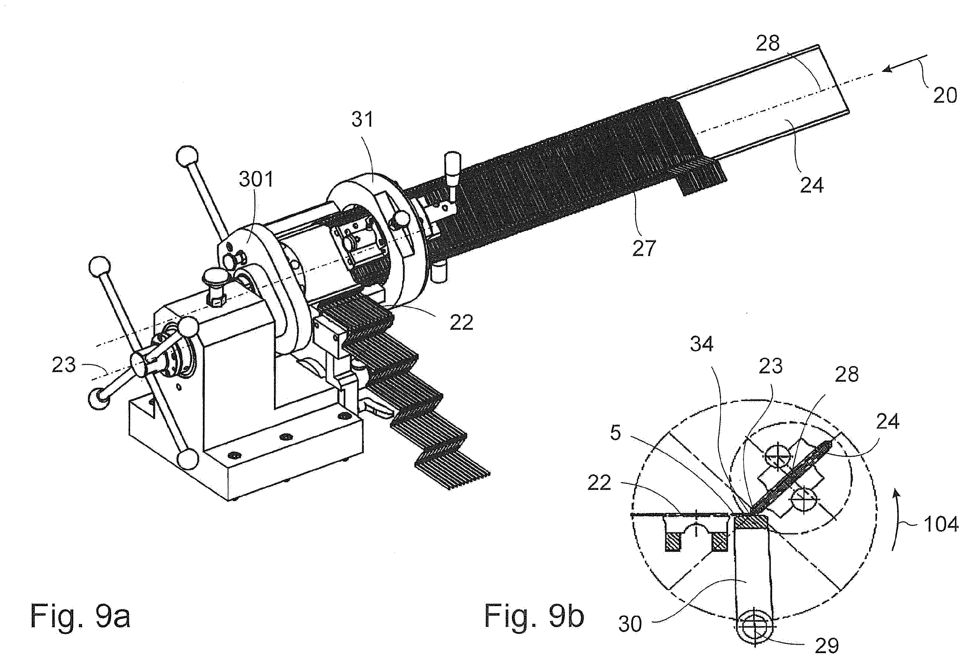

Figur 9 a, b zeigen Position 3, die gesamte Anordnung (mit Ausnahme des Druckstückes 30 und dessen Drehachse 29) ist um die zentrale Drehachse 23 entgegen der Uhrzeigerrichtung um ca. 45° geschwenkt (Pfeil 104) die Drahtanordnung 22 wird auf das Schwert 24 gezogen, insbesondere wird der Draht 5 (es verlaufen 12 Drähte parallel) über das Druckstück 30 im Zusammenwirken mit der seitlichen Kante 34 des Trägerschwertes 24 gebogen. Dabei bewegt sich das Druckstück 30 aufgrund seiner gelenkigen Lagerung um die Drehachse 29 mit und vermeidet eine Beschädigung des Drahtes. Es ergibt sich eine Abrollbewegung.

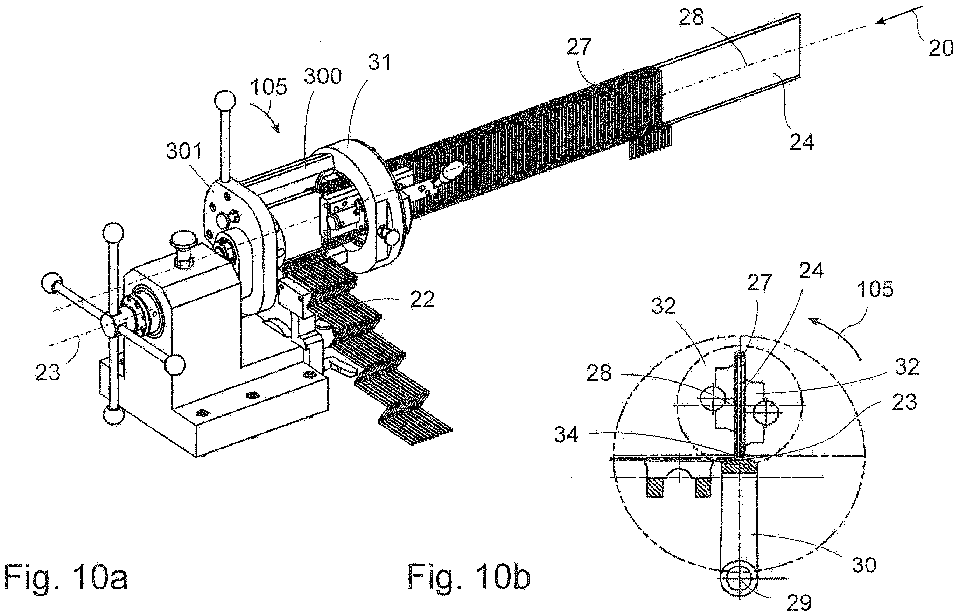

Figur 10 a, b zeigen Position 4, das Schwert 24 ist um die zentrale Drehachse 23 um 90° geschwenkt (Pfeil 105) . Nach wie vor pressen die Spannbacken 32 das Drahtpaket 27 gegen den Träger 24.

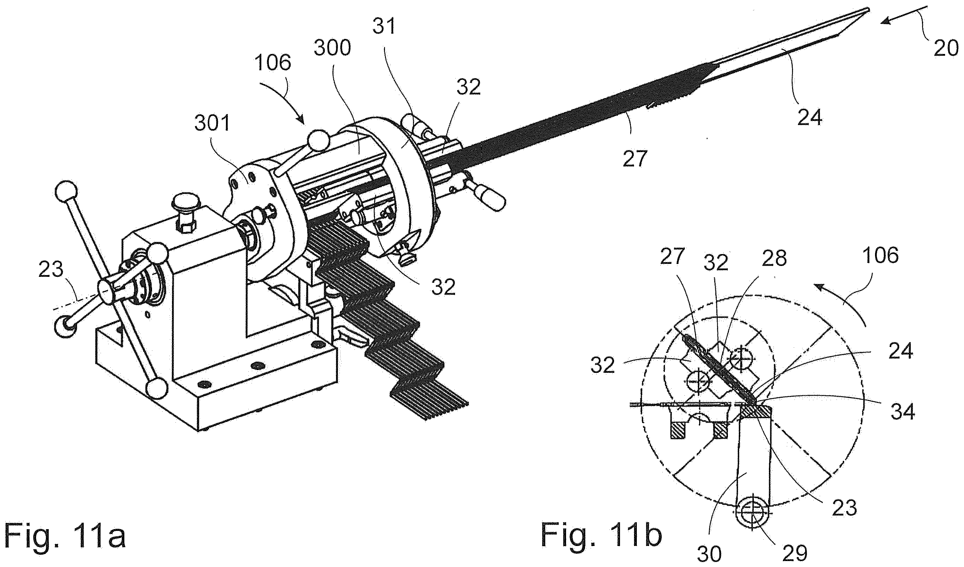

Figur 11 a, b zeigen Position 5, hier ist das Schwert 24 auf ca. 130° gedreht (Pfeil 106), gleichzeitig rollt die seitliche Kante 34 des Schwertes 24 weiter auf dem Druckstück 30 ab und prägt eine entsprechende Abwinkelung auf den Draht ein.

Figur 12 a, b zeigt Position 6, das Schwert 24 ist auf den einlaufenden Bereich 102 des Drahtes umgeklappt, also auf 180° (siehe Pfeil 107) gedreht.

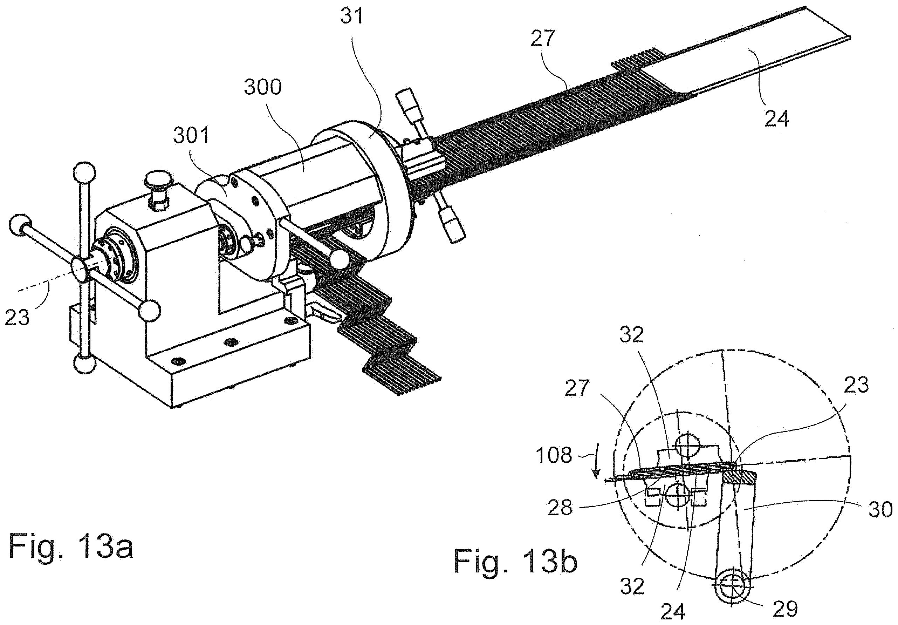

Figur 13 a, b zeigt Position 7 und hier ein Überschwenken (siehe Pfeil 108) des Schwertes 24 um die zentrale Drehachse 23, um ein Rückfedern zu minimieren.

Hierzu wird die gesamte Anordnung um 10°, 15° oder 20° mehr entgegen der Uhrzeigerrichtung (über die horizontale Lage nach Fig. 12a, 12b) geschwenkt. Nach wie vor pressen die Spannbacken 32 das Drahtpaket 27 gegen den Träger 24.

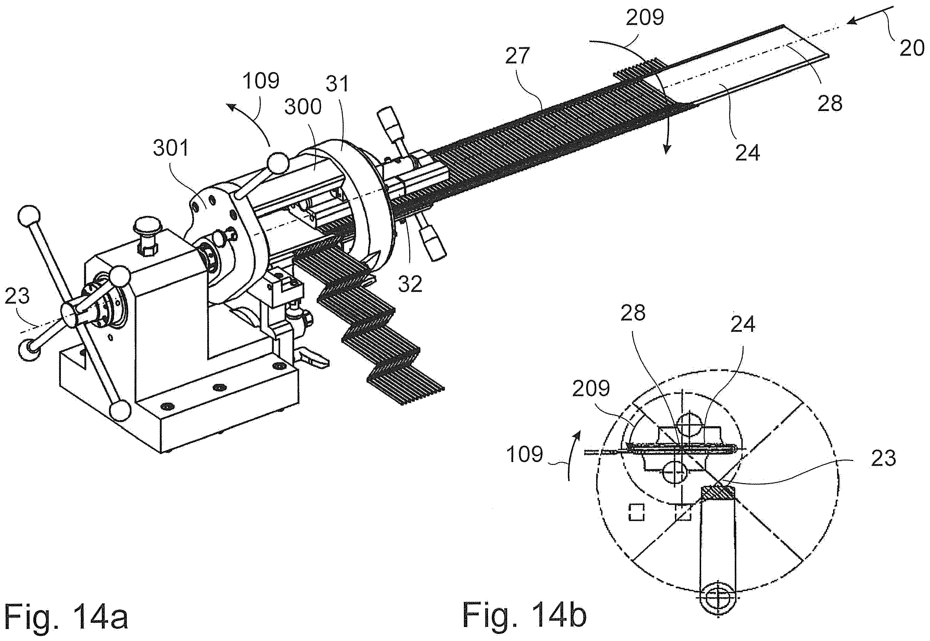

Figur 14 a, b zeigt Position 8 bei welcher gleichzeitig einander entgegen gerichtete Bewegung einerseits der gesamten Anordnung um die zentrale Achse 23 und eine diese ausgleichende Drehbewegung des Schwertes 24 um dessen Schwertdrehachse 28 erfolgt derart, dass das Schwert 24 in seiner Lage verbleibt, wie es in Figur 12 eingenommen hat. Hierfür ist vorgesehen, dass die gesamte Anordnung in Uhrzeigerrichtung (Pfeil 109) zurückgeschwenkt wird und das Schwert 24 um die Schwertdrehachse 28 entgegen dem Uhrzeigersinn (siehe Pfeil 209) entgegen geschwenkt wird.

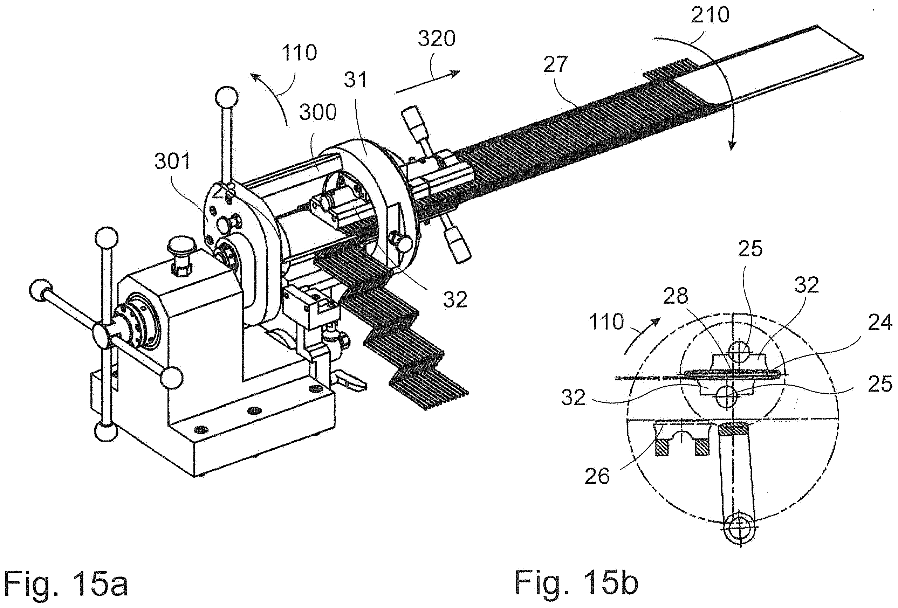

Figur 15 a, b, Position 9: die beiden entgegengesetzten Verschwenk-Bewegungen (siehe Pfeile 110 und 210) werden weiter geführt. Hierbei wird in einem diskontinuierlichen Schritt der Draht auf das Schwert 24 bzw. die Maschine 21 aufgezogen. Es wird nunmehr die temporäre Führungsbacke 26 vorbereitet, denn diese nunmehr vollständig auf das Schwert aufgewickelt einfache Drahtwickelung wird durch die Spannbacke 32 auf dem Schwert 24 weiter geschoben. Dabei sind die Spannbacken 32 auf den Führungsstangen 25 längsbeweglich (siehe Pfeil 320), die Längserstreckung der Führungsstangen 25 ist parallel orientiert zu der Schwertdrehachse 28 des Schwertes 24. Die temporäre Führungsbacke 26 übernimmt für kurze Zeit stabilisierende Aufgaben für die Drahtanordnung 22.

In Fig. 39 ist eine weitere Station (Position 10) in der Rückschwenkbewegung der gesamten Anordnung (siehe Pfeil 111) mit der Gegendrehbewegung des Schwertes 24 (siehe Pfeil 211) gezeigt.

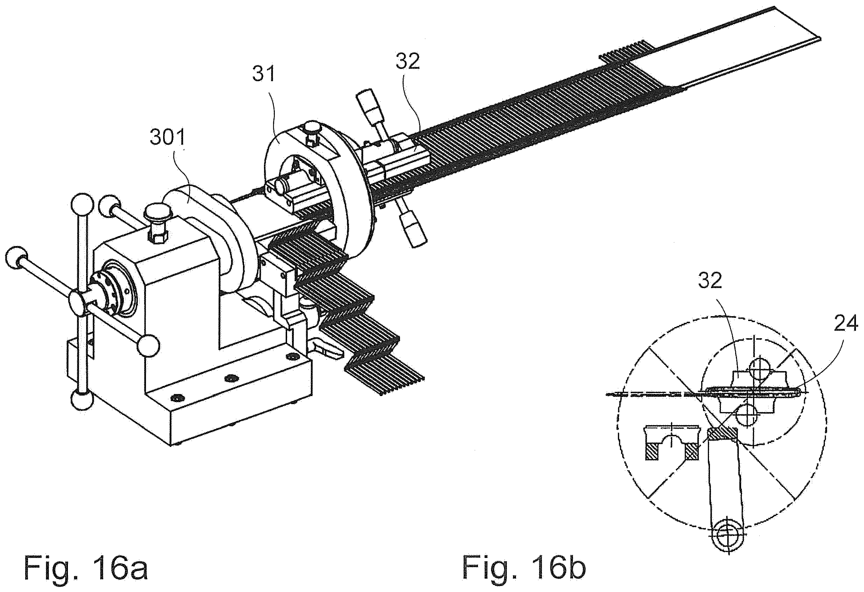

Figur 16 a, b Position 11: Das Schwert 24 ist fast wieder in der Ausgangsposition nach Figur 7 angekommen, die Drahtmatte 27 ist um eine Wicklung der Drahtanordnung 22 größer geworden, die Drahtmatte hat sich etwas verlängert. Der Prozess beginnt von neuem.

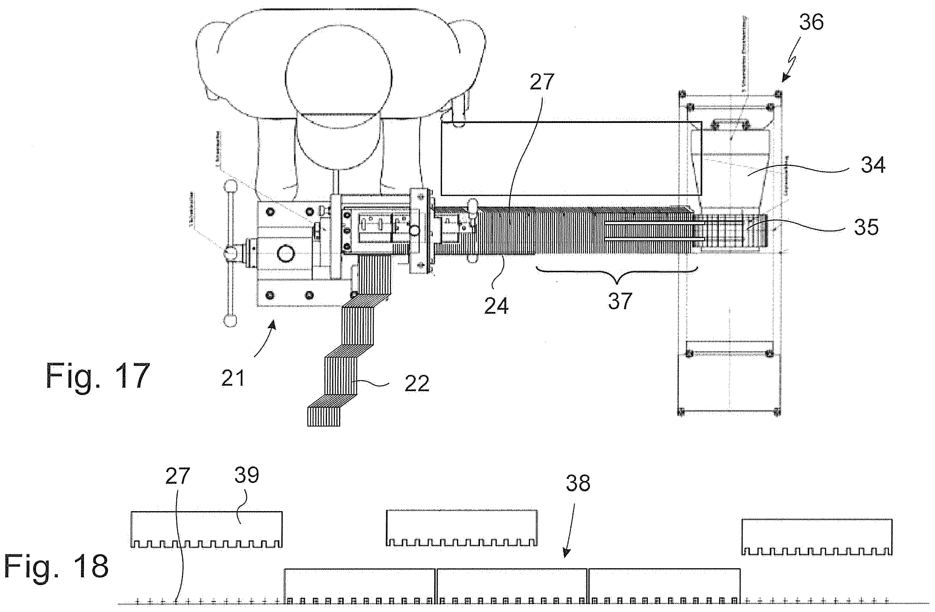

Figur 17 zeigt die Kombination mit der Maschine 21 mit einem Rollautomaten 36. Der Rollautomat 36 hat die Aufgabe, die Drahtmatte 27, die auf dem Schwert 24 aufliegt, auf ein Übertragungswerkzeug 35 aufzurollen. Der Rollautomat 36 befindet sich dabei in kinematischer Einheit mit dem Ringhalter 31, d.h., geführt exakt die gleichen Bewegungen aus wie dieser, er ist also um die zentrale Drehachse 23 genauso drehbar wie um die Schwertdrehachse 28 des Schwertes 24. Zwischen dem Ende des Schwertes 24 und dem Übertragungswerkzeug 35 wird die Übertragungsstrecke 37 überbrückt von einem Transportwerkzeug 38, dass in Figur 18 angedeutet ist.

In Figur 18 sind mehrere Klötze oder Rechensegmente 39 vorgesehen, die an einem nicht gezeigten Band umlaufend sind und die Drahtmatte 27 aufnehmen. Die Zinken der Segmente 39 wirken mit den Drahtwicklungen der Drahtmatte 27 zusammen, um einen geordneten Transport zu ermöglichen.

Das Aufrollen der Drahtmatte 27 auf das Übertragungswerkzeug 35 erfolgt mit einem Antrieb 34.

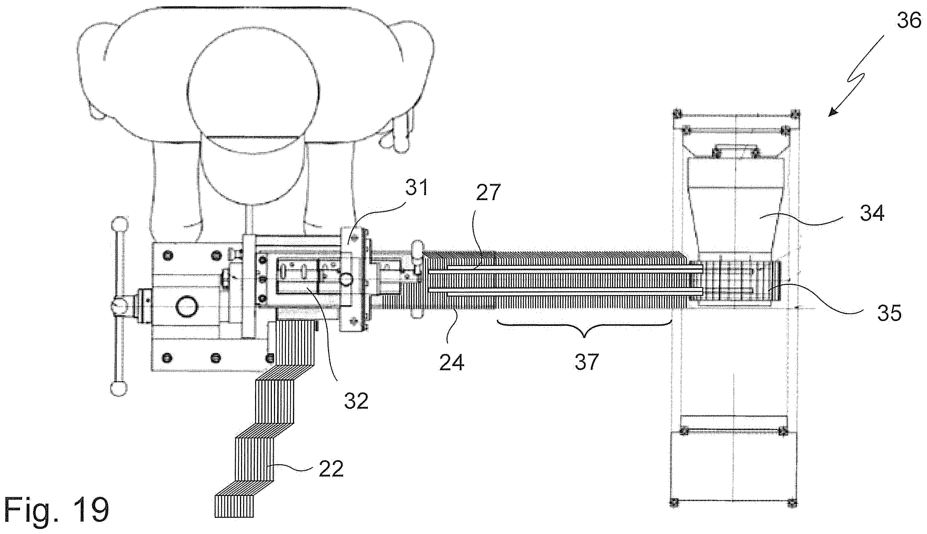

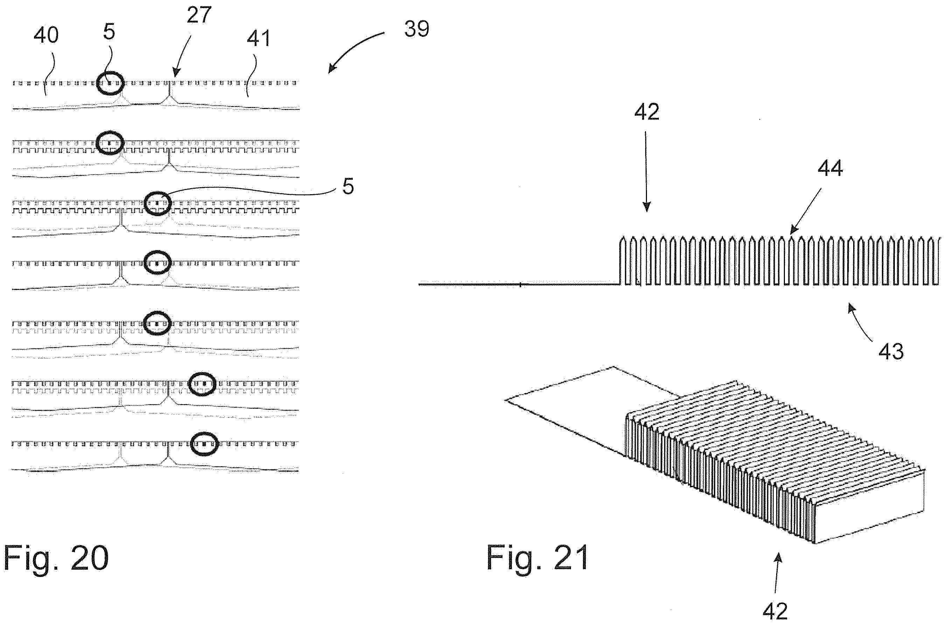

In Fig. 19 und Fig. 20 ist eine alternative Ausgestaltung zu der Variante nach Figur 17 gezeigt. Die Übertragungstrecke 37 wird hier von einem Transportwerkzeug 39 überbrückt, dass mehrere Rechenelemente 40, 41 hintereinander aufweist und durch eine Anheb-, Transport-, Absenk-, Absetzbewegung die Drahtmatte 27 bewegt. Die zwei Rechen 40,41 führen abwechselnd eine Hubbewegung durch und befördern somit die Drahtmatte 27, ein einzelner Draht 5 ist gekennzeichnet, in Richtung des Übertragungswerkzeuges 35. Siehe hierzu Figur 20.

Figur 21 zeigt eine Ausgestaltung eines Endlos-Isolation-Papieres 42. Das Isolationspapier stellt eine zusätzliche Isolationsschicht zwischen den Drähten 5 und dem Stator dar.

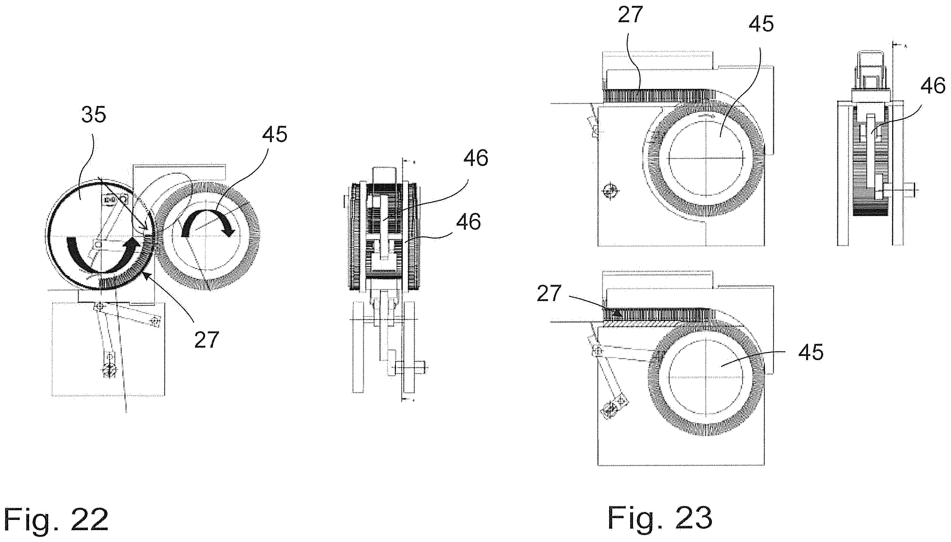

Im Schnitt gesehen (in Fig. 21 oberhalb der dreidimensionalen Ansicht), ist zu erkennen, dass die Prägung des Papieres nicht identisch ist. Auf der Unterseite 43 sind U- förmige Elemente eingeprägt, die in Einbaustellung hinterher in den Nutböden der Nutendes Stators liegen. An der Oberseite 44 sind dreieckige Spitzen angeformt, an denen dann das Endlospapier in Einbaustellung oder vorher aufgetrennt wird. Figur 22 zeigt den Übertragungsprozess der Drahtmatte 27 von den Übertragungswerkzeug 35 auf ein Verpressungswerkzeug 45, wobei diese Umsetzbewegung zum Beispiel rollenunterstützt erfolgt, die dafür sorgen, dass die Drahtmatte auf dem Verpressungswerkzeug 45 lagegenau positioniert sind. Sowohl das Übertragungswerkzeug 35 wie auch das Verpressungswerkzeug 45 weist an seinem Umfang eine Vielzahl von Nuten oder Zinken auf, um die Drahtmatte exakt und zuverlässig zu führen und Nutteilung des Stators angepasst sind.

Das Isolationspapier 42 kann jetzt entweder auf dem Übertragungswerkzeug 35 innen oder außen bezogen auf die Drahtmatte ( je nach dem wir das Übertragungswerkzeug 35 ausgebildet ist) oder auf dem Verpressungswerkzeug 45, ebenfalls in oder außen bezogen auf die aufgesetzte Drahtmatte 27 vorpositioniert sein, es ist auch möglich das Isolationspapier 42, dass endlos eingelegt ist, vor dem Einbau der Drahtmatte in den Stator bereits längs zu schneiden. "Endlos" bedeutet hier bezogen auf die Dimension/Nutanzahl des Stators.

Wenn die Drahtmatte 27 im Stator eingebaut ist, befindet sich das Isolationspapier, entweder als Endlosausführung oder in Segmente zerschnitten, in den Nuten des Stators zwischen der Drahtmatte und dem Stator.

Die Drahtmatte 27 wird mit dem Verpressungswerkzeug 45 in den Stator eingebaut. In dieser Einbausituation befindet sich dann das Isolationspapier auf der Außenseite der Drahtmatte 27, gegebenenfalls bereits in diesem Zustand längs geschnitten, und mit geeigneten Haltern positioniert.

Es ist auch möglich, dass die Drahtmatte 27 direkt auf das Verpressungswerkzeug 45 aufgewickelt wird, hierzu dient die Ausgestaltung nach Figur 23 (hier sind drei Anzeichen gezeigt) Für einen schonendes Einsetzen der Drahtmatte 27 in die Aufnahmezinken des Verpressungswerkzeuges 45 sind Führungs- oder Gleitrollen 46 vorgesehen die auf der Außenseite der Drähte schonend abrollen. Es ist vorgesehen, dass geprägtes bzw. vorgeformtes Isolationspapier angefordert wird und von zwei beweglichen Rechengehalten und hiermit transportiert wird. Das aufgefaltete Isolationspapier wird von dem Rechen in ein Hilfswerkzeug übertragen.

Der Pfiff der Anordnung liegt insbesondere darin, dass das Isolationspapier vor der Montage der Drahtmatte in den Stator auf das Verpressungswerkzeug 45, nachdem die Drahtmatte 27 x bereits auf dem Verpressungswerkzeug 45 angeordnet ist, aufgebracht und vormontiert wird.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

## Patentansprüche

1. Verfahren für die Herstellung eines Bauteiles (66) einer elektrischen Maschine, mit einer aus einer Vielzahl von als Flachdrähte ausgebildeten Drähten (5) gebildeten Drahtmatte, umfassend folgende Schritte:
- Anordnen der Vielzahl von Drähten (5) nebeneinander in einer ersten Reihenfolge; und
- z-förmiges Abwinkeln der Drähte (5);
**gekennzeichnet durch**
- Tauschen der Positionen der Drähte (5) zur Bildung einer neuen, zweiten, zur ersten unterschiedlichen Reihenfolge;
- wobei vor dem Tauschen der Positionen der Drähte (5) ein jeweils zweiter Draht (5) in eine eigene Ebene ausgelenkt wird, und dann über einen jeweilig ersten Draht (5) gekreuzt wird;
- wobei das Tauschen der Reihenfolge vor dem Z-förmigen Abwinkeln der Flachdrähte erfolgt.

2. Verfahren nach Anspruch 1 **dadurch gekennzeichnet, dass** ein paarweises Tauschen der Positionen der Drähte (5) zur Bildung einer zweiten Reihenfolge vorgesehen ist.

3. Verfahren nach einem der vorhergehenden Ansprüche, **dadurch gekennzeichnet, dass** als Bauteil der elektrischer Maschine ein Stator (66) hergestellt wird.

4. Verfahren nach einem der vorhergehenden Ansprüche,
**gekennzeichnet durch** die folgenden Schritte:
- Richten des Flachdrahts (5),
- Abschnittsweises Verdrillen des Flachdrahtes (5) um seine Längsachse derart, dass sich zwischen zwei Verdrillungsabschnitten ein erster unverdrillter Drahtbereich ergibt.

5. Verfahren nach Anspruch 4, **gekennzeichnet durch** folgende Schritte:
- Nach dem Verdrillen erfolgt das abschnittsweise Z-förmige Abwinkeln des Flachdrahtes (5).

6. Verfahren nach Anspruch 4 oder 5, **gekennzeichnet durch** folgende Schritte:
- Nach dem Verdrillen oder dem Z-förmiges Abwinkeln erfolgt ein Aufwickeln des Flachdrahtes (5) auf einen Träger (34),
- Übertragen der so erzeugten Drahtmatte auf ein Montagewerkzeug.

7. Verfahren nach Anspruch 6, **dadurch gekennzeichnet, dass** das Aufwickeln schraubenlinienförmig erfolgt.

8. Verfahren nach einem der Ansprüche 4 bis 7,
**gekennzeichnet durch** folgende Schritte:
- Montage der Drahtmatte in dem Bauteil (66) derart, dass zweite unverdrillte Drahtbereiche der Drahtmatte in Nuten (70) des Bauteiles (66) eingeführt werden, die zweiten unverdrillten Drahtbereiche unterschiedlicher Nuten (70) eines Flachdrahtbereiches von einer Abwinkelung verbunden sind und die Abwinkelung zumindest teilweise den ersten unverdrillten Drahtbereich aufnimmt.

9. Verfahren nach einem der vorhergehenden Ansprüche **dadurch gekennzeichnet, dass** vor, bei oder nach dem Auslenken des jeweils zweiten Drahtes (5) in diesem Draht (5) ein Drahtvorrat eingeformt wird.

10. Vorrichtung zum Durchführen des Verfahrens nach einem der voranstehenden Ansprüche für das Ändern der Reihenfolge von einer Vielzahl nebeneinander angeordneter Drähte, wobei in der Vorrichtung zumindest eine Auslenk- und eine Kreuzungsstation vorgesehen ist, die Auslenkstation zumindest einen Teil der Drähte (5) in eine andere Drahtebene auslenkt und die Kreuzungsstation einen Teil der Drähte (5) in einer Bewegung rechtwinklig zur Längserstreckung der Drähte (5) derart versetzt dass sich die Reihenfolge der angeordneten Drähte (5) ändert.

## Claims

1. Method of manufacturing a component (66) of an electric machine having a wire mat formed of a plurality of wires (5) designed as flat wires, comprising the steps of:
- arranging the plurality of wires (5) side by side in a first order; and
- z-shaped bending of the wires (5);
**characterized by**
- swapping the positions of the wires (5) to form a new, second order different from the first order;
- wherein prior to the swapping of the positions of the wires (5), a respective second wire (5) is deflected into its own plane and then crossed over a respective first wire (5);
- wherein the swapping of the order takes place before the Z-shaped bending of the flat wires.

2. Method according to claim 1, **characterized in that** a pairwise swapping of the positions of the wires (5) is provided to form a second order.

3. Method according to any one of the preceding claims, **characterized in that** a stator (66) is produced as a component of the electric machine.

4. Method according to any one of the preceding claims, **characterized by** the following steps:
- straightening of the flat wire (5),
- twisting the flat wire (5) in sections about its longitudinal axis in such a way that a first untwisted wire section results between two twisting sections.

5. Method according to claim 4, **characterized by** the following steps:
- after the twisting, the sectional z-shaped bending of the flat wire (5) takes place.

6. Method according to claim 4 or 5, **characterized by** the following steps:
- after the twisting or the Z-shaped bending, winding of the flat wire (5) onto a carrier (34) takes place,
- transferring the wire mat thus produced to an assembly tool.

7. Method according to claim 6, **characterized in that** the winding is carried out helically.

8. Method according to any one of claims 4 to 7, **characterized by** the following steps:
- Mounting the wire mat in the component (66) in such a way that second untwisted wire sections of the wire mat are inserted into grooves (70) of the component (66), the second untwisted wire sections of different grooves (70) of a flat wire section are connected by a knee, and the knee at least partially receives the first untwisted wire section.

9. Method according to any one of the preceding claims, **characterized in that** before, during or after the deflection of the respective second wire (5), a wire supply is formed in this wire (5).

10. Device for carrying out the method according to any one of the preceding claims for changing the sequence of a plurality of wires arranged side by side, wherein at least one deflection station and one crossing station are provided in the device, the deflection station deflects at least some of the wires (5) into another wire plane and the crossing station displaces some of the wires (5) in a movement at right angles to the longitudinal extent of the wires (5) in such a way that the order of the arranged wires (5) changes.

## Revendications

1. Procédé pour la fabrication d'un composant (66) d'une machine électrique, avec un tapis de fils formé d'une pluralité de fils (5) réalisés sous forme de fils plats, comprenant les étapes suivantes:
- arrangement de la pluralité de fils (5) les uns à côté des autres dans un premier ordre; et
- coudage en forme de Z des fils (5);
**caractérisé par**
- l'échange des positions des fils (5) pour former un nouvel, second ordre différent du premier;
- dans lequel, avant l'échange des positions des fils (5), un deuxième fil (5) respectif est dévié dans un plan propre et est ensuite croisé sur un premier fil (5) respectif;
- l'échange de l'ordre étant effectué avant le coudage en Z des fils plats.

2. Procédé selon la revendication 1, **caractérisé en ce qu'**il est prévu un échange par paires des positions des fils (5) pour former un deuxième ordre.

3. Procédé selon l'une quelconque des revendications précédentes, **caractérisé en ce que** l'on produit un stator (66) comme composant de la machine électrique.

4. Procédé selon l'une quelconque des revendications précédentes, **caractérisé par** les étapes suivantes:
- dressage du fil plat (5),
- torsadage par tronçons du fil plat (5) autour de son axe longitudinal de manière à obtenir une première zone de fil non torsadé entre deux tronçons de torsadage.

5. Procédé selon la revendication 4, **caractérisé par** les étapes suivantes:
- après le torsadage, on effectue le coudage en forme de Z par sections du fil plat (5).

6. Procédé selon la revendication 4 ou 5, **caractérisé par** les étapes suivantes:
- après le torsadage ou le coudage en Z, on effectue un enroulement du fil plat (5) sur un support (34),
- transfert du tapis de fils ainsi obtenu sur un outil de montage.

7. Procédé selon la revendication 6, **caractérisé en ce que** l'enroulement est réalisé de manière hélicoïdale.

8. Procédé selon l'une des revendications 4 à 7, **caractérisé par** les étapes suivantes:
- montage du tapis de fils dans l'élément de construction (66) de telle sorte que des deuxièmes zones de fils non torsadés du tapis de fils sont introduites dans des rainures (70) de l'élément de construction (66), les deuxièmes zones de fils non torsadés de différentes rainures (70) d'une zone de fils plats sont reliées par un coudage et le coude reçoit au moins partiellement la première zone de fils non torsadés.

9. Procédé selon l'une des revendications précédentes, **caractérisé en ce qu'**avant, pendant ou après la déviation de chaque deuxième fil (5), une réserve de fil est formée dans ce fil (5).

10. Dispositif pour la mise en oeuvre du procédé selon l'une des revendications précédentes pour la modification de l'ordre d'une pluralité de fils disposés les uns à côté des autres, dans lequel il est prévu dans le dispositif au moins une station de déviation et une station de croisement, la station de déviation dévie au moins une partie des fils (5) dans un autre plan de fil et la station de croisement déplace une partie des fils (5) dans un mouvement perpendiculaire à l'extension longitudinale des fils (5) de telle sorte que l'ordre des fils (5) disposés change.
